# EUROPÄISCHE PATENTSCHRIFT

(11) **EP 2 595 877 B1**
(45) Veröffentlichungstag und Bekanntmachung des Hinweises auf die Patenterteilung: **11.05.2016**
(21) Anmeldenummer: 11741107.4
(22) Anmeldetag: 20.07.2011
(51) Int. Cl.: B64C 1/12, B64C 3/26, B32B 3/08, B32B 5/18

(54) **STRUKTURBAUTEIL MIT ZUMINDEST EINER HAUPTLAST-TRAGENDEN BEPLANKUNGSSCHALE UND EINER TRÄGERSTRUKTUR ZUR BEFESTIGUNG DER HAUPTLAST-TRAGENDEN BEPLANKUNGSSCHALE SOWIE STRÖMUNGSKÖRPER MIT EINEM SOLCHEN STRUKTURBAUTEIL**
STRUCTURAL COMPONENT COMPRISING AT LEAST ONE MAIN-LOAD-BEARING COVERING SHELL AND A CARRIER STRUCTURE FOR ATTACHING THE MAIN-LOAD-BEARING COVERING SHELL, AND FLOW BODY COMPRISING SUCH A STRUCTURAL COMPONENT
ÉLÉMENT DE STRUCTURE COMPORTANT AU MOINS UN PANNEAU DE REVÊTEMENT SUPPORTANT LA CHARGE PRINCIPALE ET UNE STRUCTURE SUPPORT DESTINÉE À RENFORCER LE PANNEAU DE REVÊTEMENT SUPPORTANT LA CHARGE PRINCIPALE, ET CORPS D'ÉCOULEMENT COMPORTANT UN TEL ÉLÉMENT DE STRUCTURE

(30) Priorität: 20.07.2010 US 365863 P; 20.07.2010 US 365873 P; 20.07.2010 US 365882 P; 20.07.2010 US 365857 P; 20.07.2010 DE 102010031690; 20.07.2010 DE 102010031688; 20.07.2010 DE 102010027695; 20.07.2010 DE 102010027696
(43) Veröffentlichungstag der Anmeldung: 29.05.2013
(73) Patentinhaber: Airbus Operations GmbH, 21129 Hamburg (DE)
(72) Erfinder: ZUARDY, Ichwan, 21073 HAMBURG (DE); ZAHLEN, Pierre, 21680 STADE (DE); HERRMANN, Axel, Siegfried, 21684 STADE (DE)
(74) Vertreter: Uexküll & Stolberg
(86) Internationale Anmeldenummer: PCT/EP2011/003642
(87) Internationale Veröffentlichungsnummer: WO 2012/010305

(56) Entgegenhaltungen:
- EP-A1- 0 891 859
- WO-A1-03/031159
- CN-Y- 201 254 685
- US-A- 5 827 383
- US-A- 5 958 550

## Beschreibung

Die Erfindung betrifft ein Strukturbauteil mit zumindest einer hauptlast-tragenden Beplankungsschale und einer Trägerstruktur zur Befestigung der hauptlast-tragenden Beplankungsschale sowie einen Strömungskörper mit einem solchen Strukturbauteil.

Aus der US 6,291,049 ist eine Beplankungsplatte in einer Sandwichbauweise bekannt, in die pinförmige Verstärkungselemente zur Stabilisierung der Beplankungsplatte eingefügt sind. Dokument US5958550, das als Merkmale das Oberbegriffs das Anspruchs 1 aufweist, wird als nächstliegender stand der Technik angesehen.

Aufgabe der Erfindung ist weiterhin, ein Strukturbauteil mit zumindest einer hauptlast-tragenden Beplankungsschale und einer Trägerstruktur zur Befestigung der hauptlast-tragenden Beplankungsschale sowie einen Strömungskörper mit einem solchen Strukturbauteilbereitzustellen, das bzw. der schadenstolerant gestaltet ist und gleichzeitig geeignet ist, bei geringem Eigengewicht relativ große Spannungen aufzunehmen.

Diese Aufgabe wird mit den Merkmalen unabhängigen Patentanspruchs des gelöst. Weitere Ausführungsformen sind in den Unteransprüchen angegeben.

Nach einem Aspekt der Erfindung ist ein Strukturbauteil mit zumindest einer hauptlast-tragenden Beplankungsschale und einer Trägerstruktur zur Befestigung der Beplankungsschale vorgesehen. Die Beplankungsschale ist als Sandwich und aus einem inneren Hautabschnitt, einem äußeren Hautabschnitt sowie einer zwischen diesen gelegenen schublast-aufnehmenden Kernschicht gebildet, die den inneren und den äußeren Hautabschnitt flächig miteinander verbindet. Weiterhin ist die Trägerstruktur aus zumindest einem zwischen und quer zu diesen verlaufenden und entlang einer Referenz-Längsrichtung mit der Beplankungsschale verbundenen plattenförmigen Anschlussteil zur flächigen Abstützung der Beplankungsschale an der Trägerstruktur gebildet. Insbesondere ist vorgesehen, dass in der Beplankungsschale zumindest ein entlang der Referenz-Längsrichtung verlaufender Profilträger zur Ausbildung eines Verstärkungs-Abschnitts im Anschlussbereich des plattenförmigen Anschlussteils angeordnet ist, der mit dem inneren Hautabschnitt und dem äußeren Hautabschnitt zur Stabilisierung der Beplankungsschale bei Beschädigung derselben verbunden ist und dadurch von außen gegenseitig abstützt. Insbesondere ist vorgesehen, dass das Anschlussteil zur Abstützung der Beplankungsschale an der Trägerstruktur in der Dickenrichtung der Beplankungsschale gesehen außerhalb der Beplankungsschale gelegen und flächig an dem inneren Hautabschnitt anliegend an diesem befestigt ist. Dabei ist insbesondere vorgesehen, dass der wenigstens eine Profilträger in der Draufsicht auf die flächige Erstreckung der Beplankungsschale gesehen innerhalb des Anschlussbereichs angeordnet ist. Im Anschlussbereich des plattenförmigen Anschlussteils ist entlang einer Referenz-Richtung oder der Rippenanordnungs-Längsrichtung eine Mehrzahl von Verstärkungs-Vorrichtungen integriert.

Ein Vorteil der erfindungsgemäßen Lösung mit der Befestigung des Anschlussteils an der Beplankungsschale derart, dass das Anschlussteil außerhalb der Beplankungsschale gelegen und flächig an dem inneren Hautabschnitt anliegt, ist, dass der innere wie auch der äußere Hautabschnitt unversehrt bleibt. Dies ermöglicht eine Herstellung der Beplankungsschale mit durchgehenden inneren und äußeren Hautabschnitten, was wiederum die Herstellung der Beplankungsschale mit einem Harzinfusions- oder Nassverfahren (Liquid Composite Molding) möglich macht.

Dabei kann das Anschlussteil zur Befestigung desselben mit der Beplankungsschale flächig mit dem inneren Hautabschnitt verklebt sein, so dass das Anschlussteil aufgrund der flächig durch die Klebeverbindung bereitgestellten Klebekraft an der Beplankungsschale gehalten wird. Zusätzlich oder alternativ dazu kann das Anschlussteil mit der Beplankungsschale mit dem inneren Hautabschnitt mittels Verbindungselementen wie insbesondere Nieten (Blindniete, Passniete, etc.) verbunden sein, die insbesondere in wenigstens zwei entlang einander oder zueinander parallel verlaufenden Reihen in regelmäßigen Abständen voneinander befestigt sein können.

Im Anschlussbereich kann insbesondere vorgesehen sein, dass der innere Hautabschnitt, an dem das Anschlussteil anliegt, eine größere Materialdicke aufweist, als der innere Hautabschnitt seitlich des Anschlussbereichs. Nach einer Ausführungsform der Erfindung kann diese Verdickung in Bezug auf dessen flächiger Erstreckung in einem Bereich sein, der um maximal das 10fache der Dicke der Beplankungsschale von dem Randverlauf des Anschlussbereichs abweicht. Diese Dickenvergrößerung kann durch das Anordnen weiterer Schichten in diesem sich flächig erstreckenden Bereich auf die der Kernschicht und/oder auf die der Außenseite der Beplankungsschale zugewandte Oberfläche des inneren Hautabschnitts realisiert sein.

Nach einer Ausführungsform des erfindungsgemäßen Strukturbauteils ist vorgesehen, dass im Anschlussbereich des plattenförmigen Anschlussteils entlang der Referenz-Längsrichtung eine Mehrzahl von Verstärkungsteilen integriert ist.

Nach einer Ausführungsform des erfindungsgemäßen Strukturbauteils ist vorgesehen, dass zumindest einige der Verstärkungs-Teile derart in der Kernschicht angeordnet ist, dass deren Enden den inneren Hautabschnitt und/oder den äußeren Hautabschnitt jeweils zumindest teilweise durchragen, wobei insbesondere der innere Hautabschnitt und der äußere Hautabschnitt jeweils aus mehreren Lagen gebildet ist und wenigstens ein Teil der Verstärkungsteile zumindest eine erste Lage durchdringen.

Unter "Beplankungsschale" wird hierin generell ein Schalenteil verstanden, das erfindungsgemäß als Sandwichschale ausgeführt ist, und gekrümmt oder nicht gekrümmt sein kann.

Nach einem weiteren Aspekt der Erfindung ist ein Strukturbauteil mit zumindest einer hauptlast-tragenden Beplankungsschale und einer Trägerstruktur zur Befestigung der Beplankungsschale vorgesehen, wobei die Beplankungsschale als Sandwich und aus einem inneren Hautabschnitt, einem äußeren Hautabschnitt sowie einer zwischen diesen gelegenen schublast-aufnehmenden Kernschicht gebildet ist, die den inneren und den äußeren Hautabschnitt flächig miteinander verbindet, wobei die Trägerstruktur aus zumindest einem zwischen und quer zu diesen verlaufenden und entlang einer Referenz-Längsrichtung mit der Beplankungsschale verbundenen plattenförmigen Anschlussteil gebildet ist, das zur Abstützung der Beplankungsschale an der Trägerstruktur außerhalb der Trägerstruktur gelegen und flächig an dem inneren Hautabschnitt anliegend an diesem befestigt ist. Dabei ist im Anschlussbereich des plattenförmigen Anschlussteils entlang der Referenz-Längsrichtung eine Mehrzahl von Verstärkungsteilen integriert. Auch sind wenigstens einige der Verstärkungs-Teile derart in der Kernschicht angeordnet, dass deren Enden den inneren Hautabschnitt und/oder den äußeren Hautabschnitt jeweils zumindest teilweise durchragen.

Ein Vorteil der erfindungsgemäßen Lösung mit der Befestigung des Anschlussteils an der Beplankungsschale derart, dass das Anschlussteil außerhalb der Beplankungsschale gelegen und flächig an dem inneren Hautabschnitt anliegt, ist, dass der innere wie auch der äußere Hautabschnitt unversehrt bleibt. Dies ermöglicht eine Herstellung der Beplankungsschale mit durchgehenden inneren und äußeren Hautabschnitten, was wiederum die Herstellung der Beplankungsschale mit einem Harzinfusions- oder Nassverfahren (Liquid Composite Molding) möglich macht.

Dabei kann das Anschlussteil zur Befestigung desselben mit der Beplankungsschale flächig mit dem inneren Hautabschnitt verklebt sein. Zusätzlich oder alternativ dazu kann das Anschlussteil mit der Beplankungsschale mit dem inneren Hautabschnitt mittels Verbindungselementen wie insbesondere Nieten verbunden sein, die insbesondere in wenigstens zwei entlang einander oder zueinander parallel verlaufenden Reihen in regelmäßigen Abständen voneinander befestigt sein können.

Im Anschlussbereich kann insbesondere vorgesehen sein, dass der innere Hautabschnitt, an dem das Anschlussteil anliegt, eine größere Materialdicke aufweist, als der innere Hautabschnitt seitlich des Anschlussbereichs. Nach einer Ausführungsform der Erfindung kann diese Verdickung in Bezug auf dessen flächiger Erstreckung in einem Bereich sein, der um maximal das 10fache der Dicke der Beplankungsschale von dem Randverlauf des Anschlussbereichs abweicht. Diese Dickenvergrößerung kann durch das Anordnen weiterer Schichten in diesem sich flächig erstreckenden Bereich auf die der Kernschicht und/oder auf die der Außenseite der Beplankungsschale zugewandte Oberfläche des inneren Hautabschnitts realisiert sein.

Nach einer Ausführungsform des erfindungsgemäßen Strukturbauteils ist vorgesehen, dass der innere Hautabschnitt und der äußere Hautabschnitt jeweils aus mehreren Lagen gebildet ist, wobei die Verstärkungs-Teile zumindest eine erste Lage des inneren Hautabschnitts und des äußeren Hautabschnitts durchdringen.

Nach einer Ausführungsform des erfindungsgemäßen Strukturbauteils ist vorgesehen, dass in der Beplankungsschale zumindest ein entlang der Referenz-Längsrichtung verlaufender Profilträger zur Ausbildung eines Verstärkungs-Abschnitts im Anschlussbereich des plattenförmigen Anschlussteils angeordnet ist, der mit dem inneren Hautabschnitt und dem äußeren Hautabschnitt zur Stabilisierung der Beplankungsschale bei Beschädigung derselben verbunden ist und dadurch von außen gegenseitig abstützt. Bei den erfindungsgemäßen Ausführungsformen kann die Trägerstruktur insbesondere aus zumindest einer zwischen und quer zu diesen verlaufenden und entlang ihrer Rippenanordnungs-Breitenrichtung mit der Beplankungsschale verbundenen Rippen-Anordnung zur flächigen Abstützung der Beplankungsschale an der Trägerstruktur gebildet sein. Die Trägerstruktur kann aufweisen: das sich in einer Rippenanordnungs-Längsrichtung erstreckende und als Flanschteil ausgebildete plattenförmige Anschlussteil, das z.B. flächig mit einem Anschlussbereich des inneren Hautabschnitts der Beplankungsschale verbunden ist, und eine daran anschließende von der Beplankungsschale in der Tiefenrichtung der Rippen-Anordnung abstehende und in einer Rippenanordnungs-Längsrichtung erstreckende Rippe. Dabei kann insbesondere vorgesehen sein, dass in einem Zwischenbereich entlang der Rippenanordnungs-Längsrichtung und entlang zumindest eines seitlichen Rands des Beplankungsschalen-Abschnitts Verstärkungsteile oder Verstärkungs-Vorrichtungen integriert sind.

Nach einer Ausführungsform der Erfindung erstreckt sich der Zwischenbereich für die Anordnung der Verstärkungsteile von dem Rand des Anschlussbereichs aus bis zu einer Entfernung von maximal der zehnfachen Dicke der Beplankungsschale am Rand des Kernschicht-Endes.

Nach einer Ausführungsform der Erfindung ist vorgesehen, dass quer zur Rippenanordnungs-Längsrichtung mehrere Verstärkungsprofilträger nebeneinander angeordnet und dass entlang von Verstärkungsprofilen und entlang der Rippenanordnungs-Längsrichtung mehrere Verstärkungsteile oder Verstärkungs-Vorrichtungen angeordnet sind. Insbesondere kann vorgesehen sein, dass nur zwischen den beiden äußeren oder den drei äußeren Trägern mehrere Verstärkungsteile oder Verstärkungs-Vorrichtungen angeordnet sind.

Weiterhin kann vorgesehen sein, dass zumindest ein Verstärkungsprofilträger vorgesehen ist, der aus zwei Profilplatten, von denen einer mit dem inneren Hautabschnitt und der jeweils andere mit dem äußeren Hautabschnitt verbunden ist, und einer diese verbindenden Stützrippe gebildet ist, dessen Profilquerschnitt ein Doppel-T-Profilquerschnitt ist. An den Anschlussbereich definierenden Randabschnitten können jeweils zwei nebeneinander gelegene Verstärkungsprofilträger angeordnet sein, zwischen denen Verstärkungsteile in die Kernschicht eingesetzt sind. Insbesondere können Verstärkungsteile derart eingesetzt sein, dass die Enden jeweils eines Verstärkungsteils jeweils eine am inneren Hautabschnitt gelegene Profilplatte und eine am äußeren Hautabschnitt gelegene Profilplatte nebeneinander gelegener Verstärkungsprofilträger zumindest teilweise durchdringt. Die Verstärkungsteile können dabei jeweils paarweise betrachtet eine X-förmige Orientierung haben.

Alternativ oder zusätzlich kann vorgesehen sein, dass zumindest ein Verstärkungsprofilträger vorgesehen ist, der aus zwei Profilplatten, von denen einer mit dem inneren Hautabschnitt und der jeweils andere mit dem äußeren Hautabschnitt verbunden ist, und zwei diese verbindenden Stützrippen derart gebildet ist dass der Profilquerschnitt des Verstärkungsprofilträgers ein Kasten-Profilquerschnitt ist. Die Verstärkungsteile können derart eingesetzt sein, dass die Enden jeweils eines Verstärkungsteils jeweils eine am inneren Hautabschnitt gelegene Profilplatte und eine am äußeren Hautabschnitt gelegene Profilplatte desselben Verstärkungsprofilträgers zumindest teilweise durchdringt. Die Verstärkungsteile können dabei jeweils paarweise betrachtet eine X-förmige Orientierung haben.

Nach einer Ausführungsform der Erfindung ist vorgesehen, dass entlang zumindest eines Verstärkungsprofils der Rippenanordnungs-Längsrichtung mehrere Verstärkungs-Vorrichtungen in der Beplankungsschale integriert sind, die jeweils zumindest 85 % der schublast-aufnehmenden Kernschicht in deren Dickenrichtung durchragen, um die Rissfestigkeit der Beplankungsschale in dem äußeren Randabschnitt zu verbessern.

Nach einer Ausführungsform der Erfindung ist vorgesehen, dass zumindest ein Teil der Verstärkungs-Vorrichtungen (derart in der Kernschicht angeordnet ist, dass deren Enden den inneren Hautabschnitt und/oder den äußeren Hautabschnitt jeweils zumindest teilweise durchragen. Dabei können insbesondere der innere Hautabschnitt und der äußere Hautabschnitt jeweils aus mehreren Lagen gebildet sein, wobei die Verstärkungsteile zumindest eine erste Lage durchdringt.

Erfindungsgemäß ist eine hauptlast-tragende Beplankungsschale für ein Strukturbauteil eines Strömungskörpers vorgesehen. Die Beplankungsschale ist als Sandwich und aus einem inneren Hautabschnitt, einem äußeren Hautabschnitt sowie eine zwischen diesen gelegenen schublastaufnehmende Kernschicht gebildet, die den inneren und den äußeren Hautabschnitt flächig miteinander verbindet. Erfindungsgemäß kann die Beplankungsschale zur Beeinflussung von Schubspannungen in der Kernschicht eine Mehrzahl von in einem Zwischenbereich angeordneten Verstärkungs-Vorrichtungen aufweisen, die jeweils aus einer Kombination von zumindest zwei in einem zusammenhängenden Volumenteil der Beplankungsschale angeordneten Verstärkungsteilen gebildet sind, wobei die Verstärkungs-Vorrichtungen in der Längsrichtung des Zwischenbereichs hintereinander angeordnet sind, wobei bei der Kombination der Verstärkungsteile diese jeweils mit einer Abweichung von maximal 10 Grad dieselbe Orientierung in Bezug auf die Dickenrichtung der Beplankungsschale haben und wobei die Ausrichtungen der Verstärkungsteile in Bezug auf die weiteren Koordinatenrichtungen der Beplankungsschale zyklisch vorgesehen sind.

Dabei kann die Ausrichtung der Verstärkungsteile insbesondere innerhalb eines Bereichs zwischen 45 Grad und 10 Grad vorgesehen sein, wobei diese Winkelbeträge durch die Größe des Winkels zwischen der Längsrichtung des jeweiligen Verstärkungsteils und der Dickenrichtung der Beplankungsschale an dieser Stelle definiert ist.

Bei den erfindungsgemäßen Ausführungsformen, bei denen Verstärkungsteile vorgesehen sind, kann grundsätzlich vorgesehen sein, dass die oder ein Teil der Verstärkungsteile in der Beplankungsschale in jeweils in einem Volumenteil der Beplankungsschale gelegenen Gruppen von Verstärkungsteilen als Verstärkungs-Vorrichtungen angeordnet sind, wobei die Volumenteile entlang einer Referenz-Längsrichtung oder der Rippen-Längsrichtung hintereinander angeordnet sind, wobei jede Gruppe eines Volumenteils jeweils aus einer Kombination von zumindest zwei Verstärkungsteilen gebildet ist, deren Ausrichtungen jeweils maximal 30 Grad von der Dickenrichtung der Beplankungsschale abweichen und die in regelmäßiger oder unregelmäßiger Weise um eine Mittelachse des Volumenteils herum angeordnet sind. Das Volumenteil ist ein zur Veranschaulichung der Anordnung von Verstärkungsteilen gewähltes fiktives Volumenteil der Beplankungsschale, das sich über die gesamte Dicke derselben erstreckt und insbesondere als Quader geformt ist. In diesem Fall kann insbesondere die Mittelachse des Volumenteils die in der Dickenrichtung der Beplankungsschale verlaufende und die Querschnittsflächen-Schwerpunkte des Quaders verbindende Mittelachse oder Symmetrieachse sein.

Nach einem Ausführungsbeispiel ist vorgesehen, dass die Verstärkungs-Vorrichtungen in einer Referenz-Längsrichtung und insbesondere in der Rippenanordnungs-Längsrichtung gesehen hintereinander angeordnet sind und jeweils aus einem Paar von Verstärkungsteilen gebildet sind, wobei die Verstärkungsteile jedes Paares von Verstärkungsteilen derart zueinander orientiert sind, dass die Verstärkungsteile zueinander eine in einer Längserstreckung der Beplankungsschale gesehen X-förmige Verstärkungsvorrichtung bilden. Die Anordnung von Verstärkungs-Vorrichtungen kann dabei insbesondere in einem länglichen Verstärkungsbereich gelegen sein, der sich mit seiner Längsrichtung entlang der Referenz-Längsrichtung und insbesondere in der Rippenanordnungs-Längsrichtung oder entlang eines zum Befestigen einer Rippenanordnung oder eines Trägerteils vorgesehenen Anschlussbereichs erstreckt, wobei die Breite des Verstärkungsbereichs maximal die zehnfache Dicke der Beplankungsschale in diesem Bereich betragen kann.

Die Verstärkungsteile zumindest teilweise pinförmig gestaltet sein. Alternativ oder zusätzlich können Verstärkungsteile plattenförmig gestaltet sein. Dabei können die plattenförmigen Verstärkungs-Vorrichtungen einer Verstärkungs-Vorrichtung ineinander greifend angeordnet sein.

Nach einem weiteren Aspekt der Erfindung ist ein Strukturbauteil mit zumindest einer hauptlast-tragenden oder haupt-tragenden Beplankungsschale und einer Trägerstruktur zur Befestigung der Beplankungsschale vorgesehen. Die Beplankungsschale ist als Sandwich und aus einem inneren Hautabschnitt, einem äußeren Hautabschnitt sowie einer zwischen diesen gelegenen schublastaufnehmenden Kernschicht gebildet, die den inneren und den äußeren Hautabschnitt flächig miteinander verbindet. Die Trägerstruktur ist aus zumindest zwei jeweils entlang einer Längsrichtung des Strukturbauteils verlaufenden Trägerbauteilen und zumindest einer zwischen und quer zu diesen verlaufenden und entlang ihrer Längsrichtung mit der Beplankungsschale verbundenen Rippen-Anordnung zur flächigen Abstützung der Beplankungsschale an der Trägerstruktur gebildet. Die Rippen-Anordnung weist dabei auf: eine von der Beplankungsschale in seiner Querrichtung abstehende Rippe und ein daran anschließendes Flanschteil, das entlang der Rippenanordnungs-Längsrichtung flächig mit der Beplankungsschale verbunden ist. Erfindungsgemäß sind in der Beplankungsschale entlang eines quer zur Rippenanordnungs-Längsrichtung verlaufenden Beplankungsschalen-Abschnitts Verstärkungsprofile angeordnet, die das Flanschteil und den äußeren Hautabschnitt zur Stabilisierung der Beplankungsschale bei Beschädigung derselben von außen miteinander verbinden. Weiterhin sind an zwei Zwischenbereichen oder Verstärkungsbereichen, die in Rippenanordnungs-Längsrichtung und entlang der seitlichen Enden des Beplankungsschalen-Abschnitts verlaufen, Verstärkungs-Vorrichtungen integriert sind. Diese sind insbesondere mit die Kernschicht durchragenden Verstärkungsteilen ausgeführt, wobei die Verstärkungs-Vorrichtungen zumindest abschnittsweise entlang der Rippenanordnungs-Längsrichtung, d.h. in der Rippenanordnungs-Längsrichtung hintereinander liegend angeordnet sind.

Nach einem Ausführungsbeispiel kann die Beplankungsschale zur Beeinflussung von Schubspannungen in der Kernschicht eine Mehrzahl von in den Zwischenbereichen angeordneten Verstärkungs-Vorrichtungen aufweisen, die jeweils aus einer Kombination von zumindest zwei in einem zusammenhängenden Volumenteil der Beplankungsschale angeordneten Verstärkungsteilen gebildet sind. Dabei sind die Verstärkungs-Vorrichtungen in der Längsrichtung des Zwischenbereichs hintereinander angeordnet. Bei der Kombination der Verstärkungsteile haben diese jeweils mit einer Abweichung von maximal 10 Grad dieselbe Orientierung in Bezug auf die Dickenrichtung der Beplankungsschale und sind die Ausrichtungen der Verstärkungsteile in Bezug auf die weiteren Koordinatenrichtungen der Beplankungsschale zyklisch vorgesehen.

Dabei kann insbesondere vorgesehen sein, dass die Ausrichtung der Verstärkungsteile innerhalb eines Bereichs zwischen 45 Grad und 10 Grad vorgesehen ist, wobei diese Winkelbeträge durch die Größe des Winkels zwischen der Längsrichtung des jeweiligen Verstärkungsteils und der Dickenrichtung der Beplankungsschale an dieser Stelle definiert ist. Die Verstärkungs-Vorrichtungen können in der Rippenanordnungs-Längsrichtung hintereinander angeordnet sein und jeweils aus einem Paar von Verstärkungsteilen gebildet sein, wobei die Verstärkungsteile jedes Paares von Verstärkungsteilen derart zueinander orientiert sind, so dass die Verstärkungsteile zueinander eine in einer Längserstreckung der Beplankungsschale gesehen X-förmige Verstärkungsvorrichtung bilden. Die Verstärkungsteile können zumindest teilweise pinförmig gestaltet sein. Auch kann vorgesehen sein, dass als Verstärkungs-Vorrichtungen zumindest teilweise plattenförmige und sich jeweils in der Rippenanordnungs-Längsrichtung erstreckende Verstärkungsteile verwendet werden. Dabei kann weiterhin vorgesehen sein, dass von den Verstärkungs-Vorrichtungen zumindest jeweils zwei X-förmig angeordnete plattenförmige Verstärkungsteile in der Rippenanordnungs-Längsrichtung gesehen ineinander greifend angeordnet sind.

Nach einer weiteren Ausführungsform der Erfindung kann eine Verstärkungsvorrichtung jeweils aus einem Paar von Verstärkungsteilen gebildet sein, wobei die Verstärkungsteile jedes Paares von Verstärkungsteilen derart zueinander orientiert sind, dass die Verstärkungsteile zueinander eine in einer Längserstreckung der Beplankungsschale gesehen paarweise X-förmige Verstärkungsvorrichtung bilden.

Die Verstärkungsteile zumindest teilweise pinförmig und/oder zumindest an einem Ende nadelförmig gestaltet sein. Alternativ oder zusätzlich können Verstärkungsteile plattenförmig gestaltet sein. Weiterhin kann zumindest ein Ende von Verstärkungsteilen jeweils mit einer fußartigen Verbreiterung versehen sind. Dabei können die plattenförmigen Verstärkungs-Vorrichtungen einer Verstärkungs-Vorrichtung ineinander greifend angeordnet sein.

Die schublastaufnehmende Kernschicht kann einen Kernschicht-Verstärkungsbereich aufweisen, der in zumindest einem der zwei Zwischen- oder Seitenbereiche und in Rippenanordnungs-Längsrichtung verläuft und sich quer zur Längserstreckung der schublastaufnehmenden Kernschicht durch diese hindurch erstreckt, wobei der Verstärkungsbereich aus einem Material gebildet ist, das eine mindestens zweifache Steifigkeit aufweist als die schublastaufnehmende Kernschicht. Der Kernschicht-Verstärkungsbereich kann insbesondere aus Harz und z.B. aus Epoxidharz gebildet sein. Das Strukturbauteil kann derart gestaltet sein, dass mehrere der Verstärkungsteile den Kernschicht-Verstärkungsbereich jeweils durchragen.

Nach der Erfindung ist auch ein Strömungskörper mit einem Strukturbauteil vorgesehen, wobei das Strukturbauteil als hauptlast-tragendes Strukturteil und nach einem der voranstehend genannten Ausführungsformen ausgebildet ist.

Nach einem weiteren Aspekt der Erfindung ist eine hauptlast-tragende Beplankungsschale für ein Strukturbauteil eines Strömungskörpers vorgesehen, wobei die Beplankungsschale als Sandwich und aus einem inneren Hautabschnitt, einem äußeren Hautabschnitt sowie eine zwischen diesen gelegenen schublast-aufnehmende Kernschicht gebildet ist, die den inneren und den äußeren Hautabschnitt flächig miteinander verbindet, wobei die schublast-aufnehmende Kernschicht aus mehreren in der Längserstreckung der Schaumschicht nebeneinander angeordneten Kernschicht-Abschnitten gebildet ist, die jeweils an den einander anliegenden Seiten durch einen Kernschicht-Verstärkungsbereich miteinander verbunden sind, der sich quer zur Längserstreckung der Kernschicht durch diese hindurch erstreckt. Dabei kann der Kernschicht-Verstärkungsbereich aus Harz gebildet sein.

Nach einem weiteren Ausführungsbeispiel ist vorgesehen, dass entlang eines Umgebungsbereichs des Kernschicht-Verstärkungsbereichs eine Mehrzahl von Kernschicht-Verstärkungsbereichen in der schublast-aufnehmenden Kernschicht der Beplankungsschale Verstärkungs-Vorrichtungen integriert sind. Dabei kann sich der Umgebungsbereich für die Anordnung der Verstärkungs-Vorrichtungen auf beiden Seiten des Kernschicht-Verstärkungsbereichs bis zu einer Entfernung von maximal der doppelten Dicke der Beplankungsschale an der jeweiligen Stelle des Kernschicht-Verstärkungsbereichs erstrecken.

Dabei kann insbesondere vorgesehen sein, dass die Verstärkungs-Vorrichtungen in der Längsrichtung des Kernschicht-Verstärkungsbereichs hintereinander angeordnet sind und jeweils aus eine Kombination von zumindest zwei in einem zusammenhängenden Volumenteil der Beplankungsschale angeordneten Verstärkungsteilen gebildet sind, wobei bei der Kombination der Verstärkungsteile diese jeweils mit einer Abweichung von maximal 10 Grad dieselbe Orientierung in Bezug auf die Dickenrichtung der Beplankungsschale haben und wobei die Ausrichtungen der Verstärkungsteile in Bezug auf die weiteren Koordinatenrichtungen der Beplankungsschale zyklisch vorgesehen sind. Dabei kann weiterhin die Ausrichtung der Verstärkungsteile innerhalb eines Bereichs zwischen 45 Grad und 10 Grad vorgesehen sein, wobei diese Winkelbeträge durch die Größe des Winkels zwischen der Längsrichtung des jeweiligen Verstärkungsteils und der Dickenrichtung der Beplankungsschale an dieser Stelle definiert ist.

Die Verstärkungs-Vorrichtungen können insbesondere in der Längsrichtung des Kernschicht-Verstärkungsbereichs hintereinander angeordnet und jeweils aus einem Paar von Verstärkungsteilen gebildet sein, wobei die Verstärkungsteile jedes Paares von Verstärkungsteilen derart zueinander orientiert sind, so dass die Verstärkungsteile zueinander eine in einer Längserstreckung der Beplankungsschale gesehen X-förmige Verstärkungsvorrichtung bilden. Die Verstärkungs-Vorrichtungen können zumindest teilweise pinförmig gestaltet sein. Auch kann vorgesehen sein, dass mehrere der Verstärkungsteile den Verstärkungsbereich jeweils durchragen.

Das nach dem vorgenannten Aspekt der Erfindung vorgesehene Strukturbauteil eines Strömungskörpers mit zumindest einer hauptlast-tragenden Beplankungsschale und einer Trägerstruktur zur Befestigung der Beplankungsschale und der Bildung der Beplankungsschale aus Kemschicht-Abschnitten, die jeweils an den einander anliegenden Seiten durch einen Kernschicht-Verstärkungsbereich miteinander verbunden sind, kann insbesondere in Kombination mit der Verwendung einer Rippen-Anordnung vorgesehen sein, bei der entlang eines quer zur Rippenanordnungs-Längsrichtung verlaufenden Beplankungsschalen-Abschnitts Verstärkungsprofile angeordnet sind. Dabei können die Anordnung und Ausführung der Verstärkungsprofile nach einer der vorgenannten Ausführungsbeispiele gestaltet sein.

Erfindungsgemäß kann weiterhin ein Strömungskörper mit einem Strukturbauteil vorgesehen sein, wobei das Strukturbauteil als haupt-tragendes Strukturteil und nach einem der vorgenannten Ausführungsbeispiele ausgebildet ist.

Nach der Erfindung ist auch ein Strukturbauteil eines Strömungskörpers mit zumindest einer solchen zuvor beschriebenen hauptlast-tragenden Beplankungsschale und einer Trägerstruktur zur Befestigung der Beplankungsschale vorgesehen. Bei einem solchen Strukturbauteil kann vorgesehen sein, dass die Trägerstruktur aus zumindest zwei jeweils entlang einer Längsrichtung des Strukturbauteils verlaufenden Trägerbauteilen und zumindest einer zwischen und quer zu diesen verlaufenden und entlang ihrer Längsrichtung mit der Beplankungsschale verbundenen Rippen-Anordnung zur flächigen Abstützung der Beplankungsschale an der Trägerstruktur gebildet ist und insbesondere die in diesem Zusammenhang hierin genannten Merkmale aufweisen kann.

Nach der Erfindung kann auch ein Strömungskörper mit einem Strukturbauteil vorgesehen sein, das als hauptlast-tragendes Strukturbauteil ausgebildet ist und nach einem oder mehreren der vorgenannten Merkmale gebildet ist.

Unter dem Begriff "Strömungskörper" wird in diesem Zusammenhang ein Körper verstanden, der von einer Strömung umströmt wird, und somit eine Strömungs-Oberfläche aufweist, die insbesondere einen Abschnitt der umströmten Außenseite eines Fahrzeugs bildet. Der Strömungskörper kann insbesondere ein von Luft umströmter Körper und somit ein aerodynamischer Körper sein. Ein aerodynamischer Körper in diesem Zusammenhang kann generell Teil eines Fahrzeugs und insbesondere Teil eines Flugzeugs sein. Das Fahrzeug kann auch ein bodengebundenes Fahrzeug sein und dabei kann der aerodynamische Körper ein Spoiler sein. Auch kann die Strömung eine Flüssigkeitsströmung und der Strömungskörper ein Schiffkörper oder ein Teil desselben sein.

Nach einem Ausführungsbeispiel der Erfindung ist die erfindungsgemäße Beplankungsschale ein Abschnitt der Beplankung eines Flugzeugteils und z.B. Seitenruders eines Leitwerks und insbesondere eines Höhenleitwerk oder eines Seitenleitwerks und dabei einer Höhenleitwerk-Flosse oder einer Seitenleitwerk-Flosse oder eines Höhenleitwerk-Ruders oder eines Seitenleitwerk-Ruders, eines Flügels, einer Steuerklappe oder einer Hochauftriebsklappe, eines Canards oder eines Rumpfs, also generell eines aerodynamischen Körpers sein. Die vorbestimmte Maximalkraft ist dabei das Aufschlagen eines Körpers mit einem maximalen Gewicht bei einer angenommenen Geschwindigkeit des Flugzeugs und somit Strömungsgeschwindigkeit. Für die erfindungsgemäß vorgesehene Beplankungsschale wird dabei eine Beschädigung zugelassen, die noch die Flugtüchtigkeit des Luftfahrzeuges gewährleistet.

Erfindungsgemäß ist ein Strukturbauteil eines Strömungskörpers mit einer Beplankungsschale sowie eine Beplankungsschale eines Strömungskörpers vorgesehen, wobei die Beplankungsschale derart im Strukturbauteil integriert ist, dass diese eine Strömungsoberfläche ausgebildet und zugleich ein hauptlast-tragender Bestandteil des Strömungskörpers ist.

Erfindungsgemäß ist ein Strukturbauteil oder ist eine Beplankungsschale eines Strukturbauteils des Strömungskörpers als hauptlast-tragendes Strukturteil gebildet. Unter dem Begriff "hauptlast-tragend" oder "hauptlast-tragend" wird in diesem Zusammenhang ein Strukturbauteil oder Bestandteil desselben oder eine Beplankungsschale verstanden, das als hinsichtlich seiner Beanspruchung aufgrund äußerer Kräfte im Strömungskörper Hauptlasten aufnimmt und überträgt. Somit sind die hauptlast-tragenden Bestandteile des Strömungskörpers derart auszulegen, dass diese bei dem Auftreten angenommener äußerer Maximalkräfte als tragende Bestandteile erhalten bleiben und in der Lage sein müssen, nach wie vor Mindestlasten zu übertragen. Insofern ist die erfindungsgemäß vorgesehene Beplankungsschale ein "schadenstolerantes" Bauteil oder eine "chadenstolerante" Komponente, da bei dem Auftreten einer vorbestimmten äußeren Maximalkraft die Beschädigung der Beplankungsschale zwar in Kauf genommen wird, jedoch die Beschädigung nicht derart auftreten darf, dass der Strömungskörper noch als Ganzes seine Strömungsfunktion nicht mehr erfüllen könnte.

Die bei den verschiedenen Aspekten der Erfindung und/oder Ausführungsbeispielen und Varianten der Erfindung in der jeweiligen Beplankungsschale vorgesehenen Verstärkungsvorrichtungen können generell nach den hierin genannten Ausführungsbeispielen ausgeführt sein. Dabei hängt die jeweilige Richtung oder Längsrichtung, entlang der die Verstärkungsvorrichtungen in der Beplankungsschale im jeweiligen Anwendungsfall angeordnet sind, von der Orientierung und dem Verlauf des im jeweiligen Anwendungsfall zu verstärkenden Bereichs der Beplankungsschale, in diesem Zusammenhang auch Zwischenbereich oder Verstärkungsbereich genannt, ab.

Als jeweilige Längsrichtung kann insbesondere die Richtung eines Bereichs sein, mit der die Aufnahme von Schubspannungen und somit die Vermeidung von Rissbildungen in der Kernschicht erreicht werden kann. Insbesondere kann als jeweilige Längsrichtung oder der Verlauf, entlang der bzw. dem die Verstärkungsvorrichtungen erfindungsgemäß angeordnet sind, vorgesehen sein: bei der Verbindung oder Befestigung der Beplankungsschale mit einer Rippenordnung die Rippenanordnungs-Längsrichtung, bei der Bildung von Kernschicht-Abschnitten aus Kernschicht-Verstärkungsbereichen die Längsrichtung oder der Längsverlauf der Verstärkungsbereiche oder eines Abschnitts derselben, bei der Bildung der Beplankungsschale mit einem äußeren Randabschnitt mit einem kernschichtfreien Anschlussbereich entlang des Verlaufs der oder entlang der Längsrichtung derselben oder eines Abschnitts derselben. Die erfindungsgemäß vorgesehene Anordnung von Verstärkungsvorrichtungen ist also derart ausgeführt, dass die Verstärkungsvorrichtungen entlang eines länglich ausgebildeten zu verstärkenden Bereichs oder Verstärkungsbereichs des Beplankungsfeldes und in der Längsrichtung desselben hintereinander angeordnet sind, um mit dieser Maßnahme das Weiterleiten von Schubspannungen im Beplankungsfeld zu verhindern. Der Verstärkungsbereich bzw. die Längsrichtung desselben kann geradlinig oder krummlinig verlaufen.

Generell, d.h. bei den verschiedenen Aspekten der Erfindung und/oder Ausführungsbeispielen und Varianten der Erfindung, weist also die Beplankungsschale zur Beeinflussung von Schubspannungen in der Kernschicht eine Mehrzahl von in einem Zwischenbereich der Beplankungsschale, der entlang der flächigen Erstreckung der Beplankungsschale verläuft, angeordnete Verstärkungs-Vorrichtungen auf. Dabei kann generell, vorgesehen ist, dass die Verstärkungs-Vorrichtungen jeweils aus einer Kombination von zumindest zwei in einem zusammenhängenden Volumenteil der Beplankungsschale angeordneten Verstärkungsteilen gebildet sind, wobei die Verstärkungs-Vorrichtungen in der Längsrichtung des Zwischenbereichs oder des zu verstärkenden Bereichs gesehen hintereinander angeordnet sind und wobei bei der Kombination der Verstärkungsteile diese jeweils mit einer Abweichung von maximal 10 Grad dieselbe Orientierung in Bezug auf die Dickenrichtung der Beplankungsschale haben und wobei die Verstärkungsteile in Bezug auf die weiteren Koordinatenrichtungen der Beplankungsschale zyklisch angeordnet sind. Dabei ist die Orientierung der Verstärkungsteile generell innerhalb eines Winkelbereichs zwischen 70 Grad und 0 Grad vorgesehen, wobei diese Winkelbeträge durch die Größe des Winkels zwischen der Längsrichtung des jeweiligen Verstärkungsteils und der Dickenrichtung der Beplankungsschale an dieser Stelle definiert ist. Für die erfindungsgemäßen Anwendungsfälle ist insbesondere vorgesehen, dass die Längsausrichtungen der Verstärkungsteile in einem Winkelbereich zwischen 45 Grad und 10 Grad gelegen sind. Die weiteren Koordinatenrichtungen sind die beiden in der ebenen Längserstreckung der Beplankungsschale verlaufenden Koordinatenrichtungen, also die Beplankungsschale-Längsrichtung und die Beplankungsschale-Querrichtung. Dabei kann zusätzlich auch zumindest ein weiteres Verstärkungsteil in dem Volumenteil angeordnet sein, das parallel zu einem weiteren Verstärkungsteil in dem Volumenteil ausgerichtet ist. Alternativ oder zusätzlich können generell auch weiter Verstärkungsteile in dem Volumenelement angeordnet sein. Die Verstärkungs-Vorrichtungen können insbesondere in der Rippenanordnungs-Längsrichtung hintereinander angeordnet und jeweils aus einem Paar von Verstärkungsteilen gebildet sein, wobei die Verstärkungsteile jedes Paares von Verstärkungsteilen derart zueinander orientiert sind, so dass die Verstärkungsteile zueinander eine in einer Längserstreckung der Beplankungsschale gesehen X-förmige Verstärkungsvorrichtung bilden. Die Verstärkungsteile können insbesondere zumindest teilweise pinförmig gestaltet sind.

Weiterhin kann generell vorgesehen sein, dass bei den aufeinander folgenden Volumenteilen eine unterschiedliche Anzahl und Form von pinförmigen in den jeweiligen zusammenhängenden Volumenteilen der Beplankungsschale angeordneten Verstärkungsteilen vorgesehen sein können, z. B. in einem ersten Volumenteil zwei Verstärkungsteile, in dem darauf folgenden zweiten Volumenteil vier Verstärkungsteile und in dem darauf folgenden dritten Volumenteil drei Verstärkungsteile. Die Volumenteile sind fiktive Bereiche, deren Grenzen derart definiert sein, das in diesen die jeweilige Anordnung von Verstärkungsteilen angeordnet oder enthalten ist. Die Volumenteile können insbesondere quaderförmig oder würfelförmig definiert sein. Verschiedene Volumenteile einer Abfolge von in der jeweiligen Längsrichtung hintereinander gelegenen Volumenteilen können verschiedene Größen von Volumenteilen haben. Die Volumenteile können sich in der Längsrichtung gesehen auch überlappen, wenn ein Verstärkungsteil eines Volumenteile in das Innere eines jeweils benachbarten anderen Volumenteils eingreift. Die Ausrichtung der Volumenteile ist insbesondere derart vorgesehen, dass eine Mittelachse oder Symmetrieachse der Volumenteile dieselbe Orientierung hat wie die Orientierung der jeweils für die Anordnung der Verstärkungsteile relevanten Längsachse der Beplankungsschale. D.h. bei einer geradlinigen für die Anordnung der Verstärkungsteile relevanten Längsrichtung sind die Volumenteile insbesondere mit derselben Ausrichtung angeordnet, d.h. diese weisen zueinander parallele Mittelachse oder Symmetrieachse auf, wenn die jeweils relevante Längsachse der Beplankungsschale geradlinig verläuft.

Unter "Dickenrichtung der Beplankungsschale" wird-erfindungsgemäß die Richtung der kürzesten Abstandslinie zwischen dem inneren Hautabschnitt und dem äußeren Hautabschnitt an der jeweiligen Stelle der Beplankungsschale verstanden.

Unter "in Bezug auf die weiteren Koordinatenrichtungen der Beplankungsschale zyklische Anordnung" der Verstärkungsteile wird in diesem Zusammenhang verstanden, dass die Ausrichtungen der Verstärkungsteile in Bezug auf die weiteren Koordinatenrichtungen der Beplankungsschale zyklisch vorgesehen sind. Räumlich gesehen bedeutet dies auch, dass die Verstärkungsteile mit der vorgegebenen Orientierung gleichmäßig oder ungleichmäßig entlang eines Zylindermantels verteilt sind, der um die durch z. B. das geometrische Zentrum des Volumenteils verlaufende Dickenkoordinate der Beplankungsschale verläuft. Bei nur zwei Verstärkungsteilen ergibt sich die genannte X-förmige Anordnung derselben.

Unter "Längserstreckung der Beplankungsschale" wird erfindungsgemäß die lokale Orientierung der Mittelebene der Beplankungsschale verstanden, die lokal oder über den gesamten jeweils betrachteten Abschnitt derselben gekrümmt oder ungekrümmt gestaltet sein kann.

Unter "Orientierung der Verstärkungsteile" wird die Richtung der Längsachse der Verstärkungsteile verstanden. Die Längsachse der Verstärkungsteile kann die Symmetrieachse sein und bei einer unsymmetrischen und z. B. gekrümmten Gestaltung der Verstärkungsteile kann die Orientierung der Verstärkungsteile durch die Sehne des in der Längsrichtung vordersten und hintersten Punktes verstanden. Die Längsrichtung ergibt sich aus der größten Länge der Verstärkungsteile.

Unter "für die Anordnung der Verstärkungsvorrichtungen relevanten Längsachse der Beplankungsschale" wird erfindungsgemäß die Längsrichtung des jeweiligen Zwischenbereichs verstanden.

Nach einem Ausführungsbeispiel für die Gestaltung und Anordnung von Verstärkungs-Vorrichtungen kann vorgesehen sein, dass in zumindest einem Volumenteil oder in sämtlichen Volumenteilen entlang einer jeweils für die Anordnung der Verstärkungsteile relevanten Längsachse der Beplankungsschale jeweils ein Paar von Verstärkungsteilen oder genau zwei Verstärkungsteile angeordnet sind, die derart zueinander orientiert sind, dass diese jeweils in der jeweils für die Anordnung der Verstärkungsteile relevanten Längsachse der Beplankungsschale gesehen X-förmig angeordnet sind.

Unter "Längserstreckung der Beplankungsschale" wird erfindungsgemäß eine Richtung oder eine flächige Erstreckung verstanden, die in der Ebene gelegen ist, die durch die Querrichtung der Beplankungsschale und der Längsrichtung der Beplankungsschale an der jeweiligen Stelle aufgespannt wird.

Die Verstärkungsteile können insbesondere pinförmig oder stabförmig gestaltet sein.

Auch können Verstärkungsteile plattenförmig gebildet sein. Dabei kann insbesondere vorgesehen sein, dass zumindest jeweils zwei in der Längsrichtung des Zwischenbereichs gesehen X-förmig angeordnete plattenförmige Verstärkungsteile ineinander greifend angeordnet sind. Weiterhin kann dabei insbesondere vorgesehen sein, dass sich die plattenförmigen Verstärkungsteile in ihrer Breitenrichtung insbesondere in der Längsrichtung des Zwischenbereichs oder in der jeweils für die Anordnung der Verstärkungsvorrichtungen relevanten Längsachse der Beplankungsschale erstrecken.

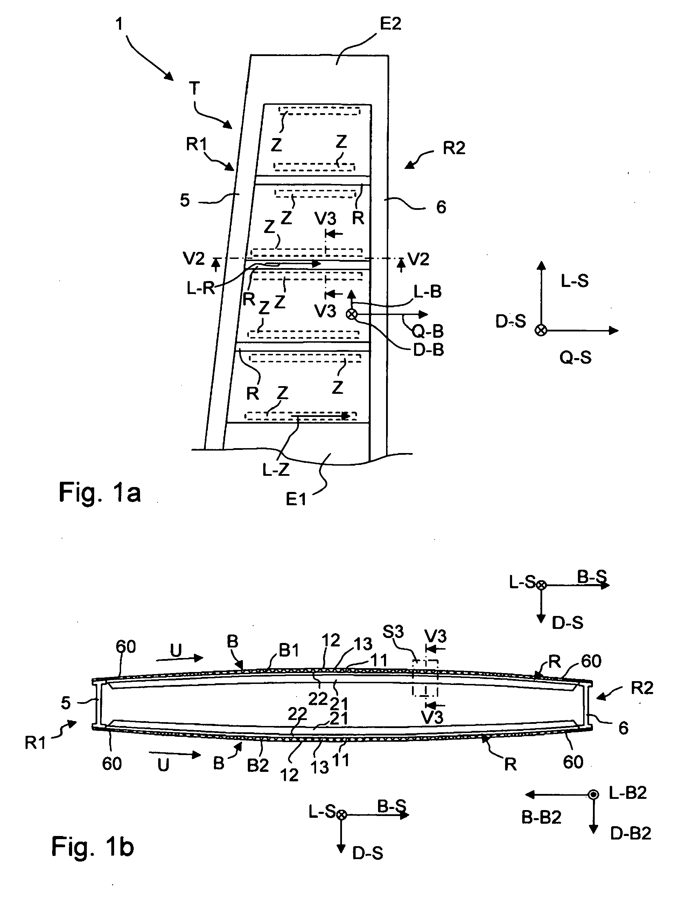

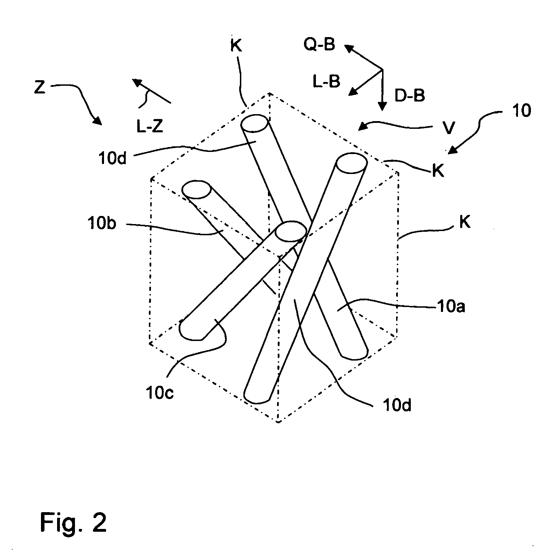

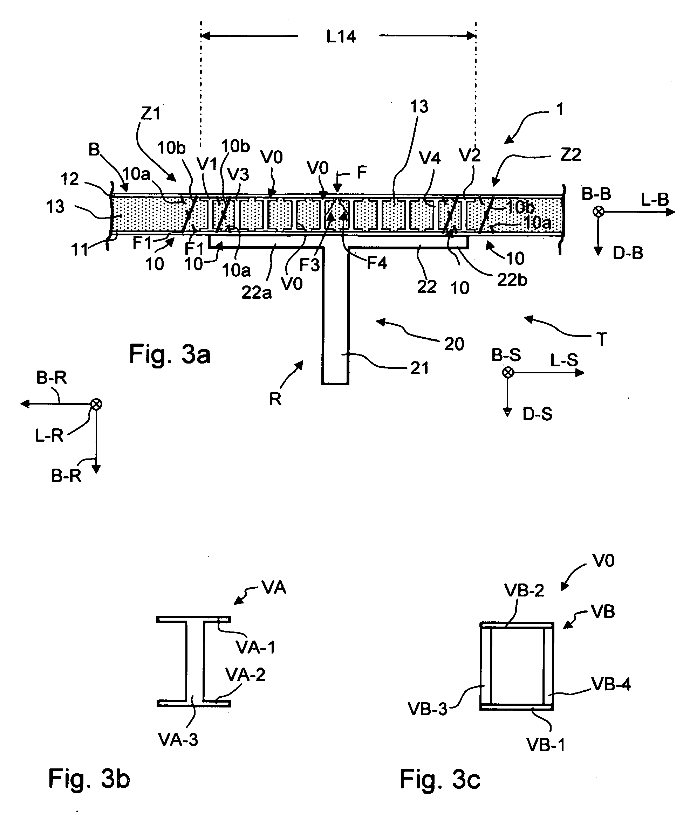

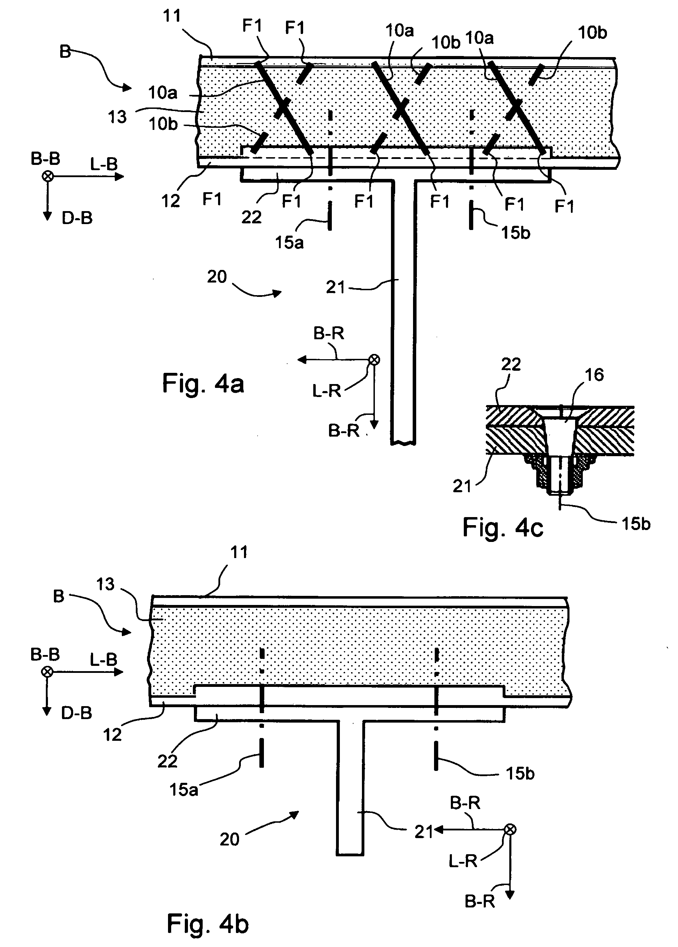

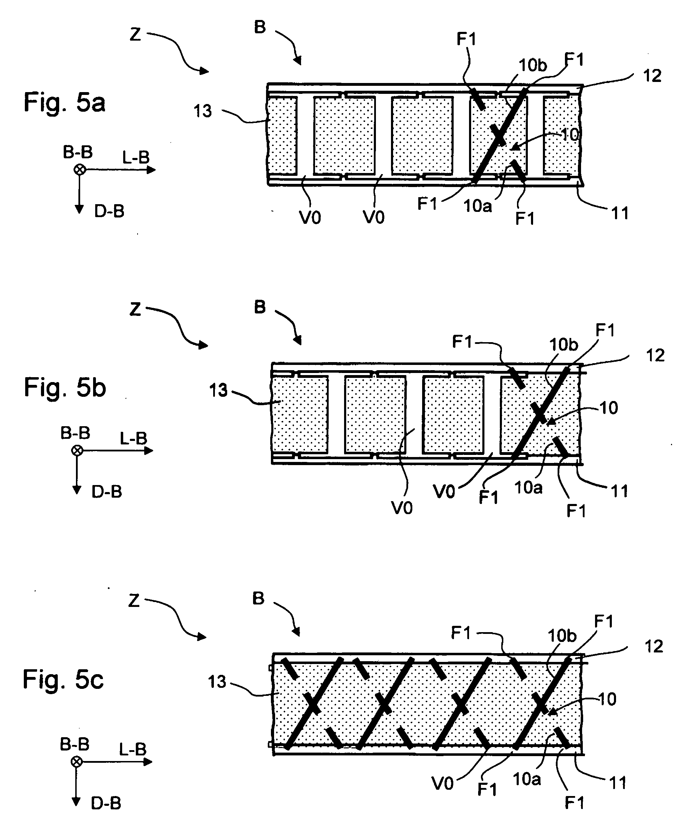

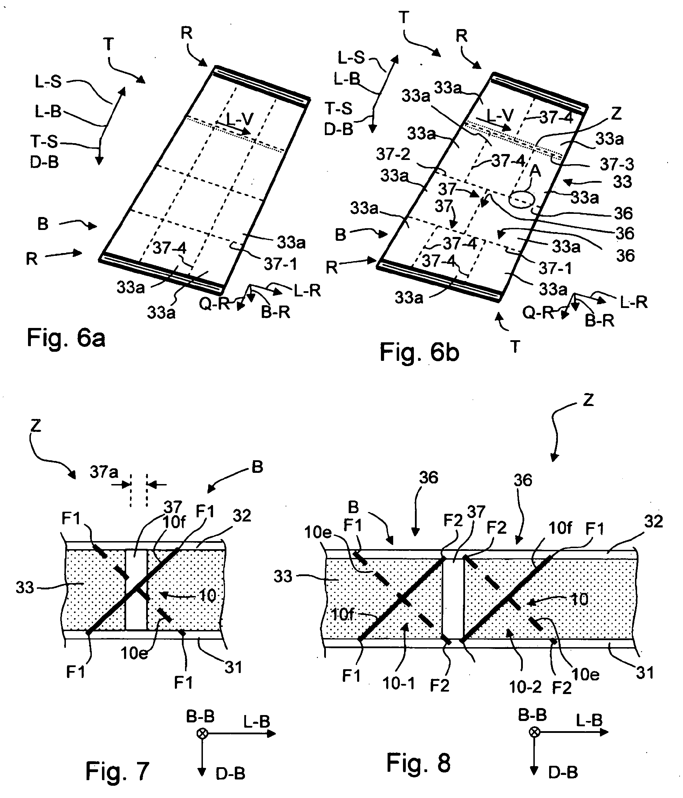

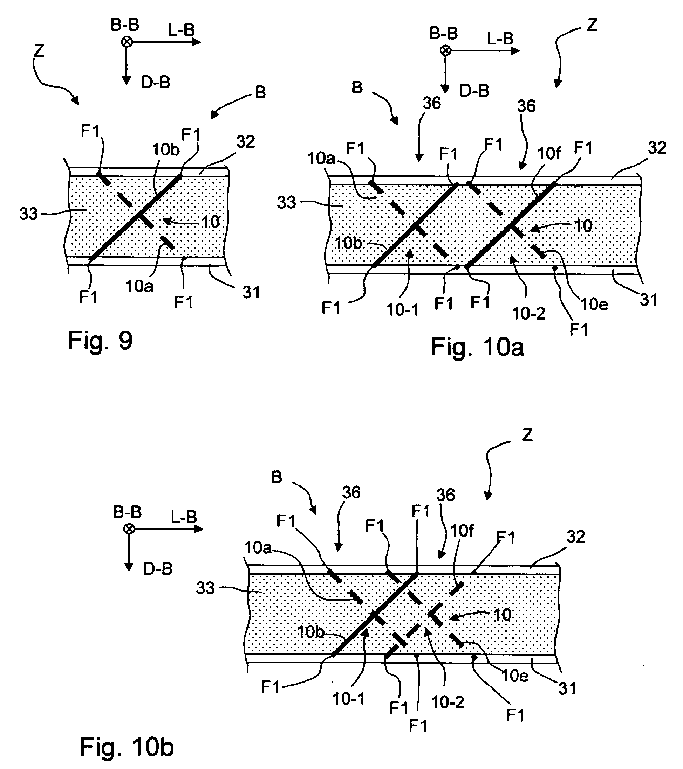

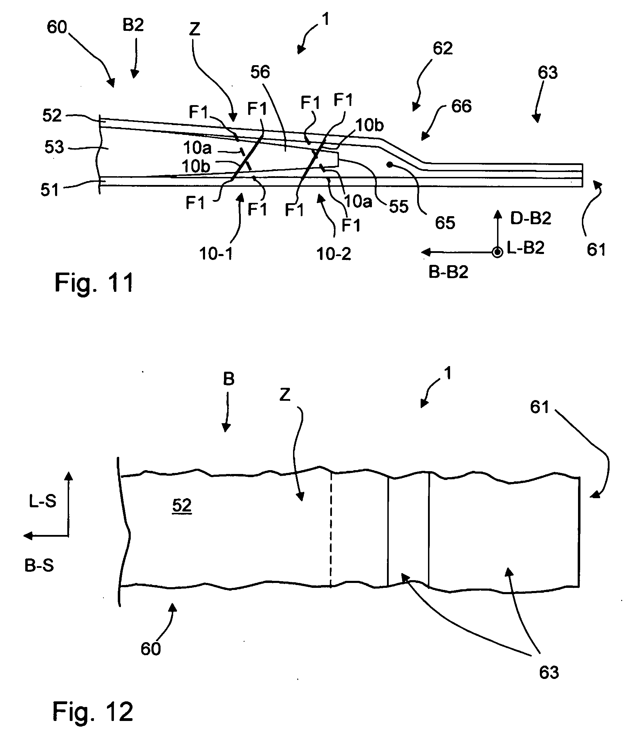

Im Folgenden werden Ausführungsbeispiele der Erfindung an Hand der beigefügten Figuren beschrieben, die zeigen:
▪ Figur 1 a eine schematische Draufsicht auf ein Strukturbauteil oder einen Abschnitt eines Seitenleitwerks als Beispiel des erfindungsgemäßen Strömungskörpers mit Trägerbauteilen und zwischen diesen verlaufenden Rippen, bei dem jedoch die bestimmungsgemäß vorgesehene Beplankungsschale nicht dargestellt ist, wobei schematisch die Lage von Zwischenbereichen oder Verstärkungsbereichen für die Anordnung von erfindungsgemäß vorgesehenen Verstärkungs-Vorrichtungen eingetragen sind,
▪ Figur 1b eine Schnittdarstellung des Strömungskörpers nach der Figur 1a entlang der in der Figur 1 a eingetragenen Linie V2-V2 mit der ebenfalls in der Figur 1 a eingetragenen Blickrichtung in Form zweier Pfeile,
▪ Figur 2 eine schematische Schnittdarstellung eines fiktiven Volumenteils als Teil des Zwischenbereichs der Beplankungsschale mit einer Ausführungsform einer Verstärkungs-Vorrichtung mit Verstärkungsteilen, die zyklisch in dem Volumenteil angeordnet sind,
▪ Figur 3a eine Schnittdarstellung eines Bereichs S3 des Strömungskörpers der Figuren 1 a und 1b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer Beplankungsschale ist, die nach einem Ausführungsbeispiel der Erfindung mit einem inneren, einem äußeren Hautabschnitt sowie einer zwischen diesen gelegenen schublast-aufnehmenden Kernschicht gestaltet ist,
▪ Figur 3b eine Darstellung einer ersten Ausführungsform einer Querschnittsform von in dem Strukturbauteil nach der Figur 3 verwendeten Verstärkungsprofilen,
▪ Figur 3c eine Darstellung einer zweiten Ausführungsform einer Querschnittsform von in dem Strukturbauteil nach der Figur 3 verwendeten Verstärkungsprofilen,
▪ Figur 4a eine Schnittdarstellung des Bereichs S3 des Strömungskörpers der Figuren 1 a und 1 b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer mit einem inneren, einem äußeren Hautabschnitt sowie einer zwischen diesen gelegenen schublast-aufnehmenden Kernschicht gestalteten Beplankungsschale, bei der die Befestigung der Tragstruktur an der Beplankungsschale nach einem weiteren Ausführungsbeispiel der Erfindung ausgeführt ist,
▪ Figur 4b eine Schnittdarstellung des Bereichs S3 des Strömungskörpers der Figuren 1 a und 1b, die entlang der in den Figuren 1 a und 1b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer mit einem inneren, einem äußeren Hautabschnitt sowie einer zwischen diesen gelegenen schublast-aufnehmenden Kernschicht gestalteten Beplankungsschate, bei der die Befestigung der Tragstruktur an der Beplankungsschale nach einem weiteren Ausführungsbeispiel der Erfindung ausgeführt ist,
▪ Figur 4c eine Darstellung einer erfindungsgemäßen Ausführungsform eines Verbindungselements einer Verbindungsvorrichtung zur Verbindung eines Anschlussteils einer Trägerstruktur an der Beplankungsschale mit einem Verbindungselement,
▪ Figur 5a eine Querschnittsdarstellung eines Ausführungsbeispiels eines oberhalb der Rippenanordnung gelegenen Anschlussbereichs des Beplankungsschalen-Abschnitts der Beplankungsschale mit einem Verstärkungsprofilteilen, wobei in der Beplankungsschale zwischen zwei Verstärkungsprofilteilen eine Anordnung von X-förmig zueinander angeordneten Verstärkungs-Vorrichtungen nach der Erfindung integriert sind,
▪ Figur 5b eine Querschnittsdarstellung eines weiteren Ausführungsbeispiels eines oberhalb der Rippenanordnung gelegenen Anschlussbereichs des Beplankungsschalen-Abschnitts der Beplankungsschale mit einer Mehrzahl von Verstärkungsprofilteilen, wobei in der Beplankungsschale seitlich der Verstärkungsprofilteile eine Anordnung von X-förmig zueinander angeordneten Verstärkungs-Vorrichtungen nach der Erfindung integriert sind,
▪ Figur 5c eine Querschnittsdarstellung eines weiteren Ausführungsbeispiels eines oberhalb der Rippenanordnung gelegenen Anschlussbereichs des Beplankungsschalen-Abschnitts der Beplankungsschale, in den eine Mehrzahl von X-förmig zueinander angeordneten Verstärkungs-Vorrichtungen nach der Erfindung integriert sind,
▪ Figur 6a eine perspektivische Draufsicht auf eine erste Ausführungsform einer Beplankungsschale nach der Erfindung mit schematisch dargestellten Trägerstrukturen, wobei bei der Darstellung der Beplankungsschale schematisch Verstärkungsbereiche oder Verbindungsbereiche innerhalb der schublastaufnehmenden Kernschicht der Beplankungsschale eingetragen sind,
▪ Figur 6b eine perspektivische Draufsicht auf eine zweite Ausführungsform einer Beplankungsschale nach der Erfindung mit schematisch nach der Figur 6a dargestellten Trägerstrukturen, bei der die Verstärkungsbereiche oder Verbindungsbereiche innerhalb der schublast-aufnehmenden Kernschicht- der Beplankungsschale gegenüber der in der Figur 6a verändert sind,
▪ Figur 7 einen Querschnitt eines ersten Ausführungsbeispiels eines in der Figur 6 mit "A" bezeichneten Bereichs der Beplankungsschale nach der Figur 7, der mit einem Verbindungsbereich aus Harz sowie eine Ausführungsform einer im Zusammenhang mit dem Verbindungsbereich vorgesehenen Anordnung von Rippenanordnungs-Verstärkungsprofilen aufweist,
▪ Figur 8 einen Querschnitt eines zweiten Ausführungsbeispiels eines in der Figuren 6a und 6b mit "A" bezeichneten Bereichs der Beplankungsschale nach den Figuren 6a oder 6b, der mit einem Verbindungsbereich aus Harz sowie einer weiteren Ausführungsform einer im Zusammenhang mit dem Verbindungsbereich vorgesehenen Anordnung von Rippenanordnungs-Verstärkungsprofilen aufweist,
▪ Figur 9 einen Ausschnitt eines Querschnitts der Beplankungsschale, in die eine Reihe von Verstärkungsvorrichtungen mit jeweils einer Anordnung von zwei Verstärkungsteilen, die zueinander X-förmig gelegen sind, eingebracht sind, wobei in der Figur 9 die Verstärkungsteile einer Verstärkungsvorrichtung dargestellt sind,
▪ Figur 10a einen Ausschnitt eines Querschnitts der Beplankungsschale, in die zwei nebeneinander verlaufende Reihen von Verstärkungsvorrichtungen mit jeweils einer Anordnung von zwei Verstärkungsteilen, die zueinander X-förmig gelegen sind, eingebracht sind, wobei in der Figur 10a die zwei Verstärkungsteile jeweils einer Verstärkungsvorrichtung dargestellt sind,
▪ Figur 10b einen Ausschnitt eines Querschnitts der Beplankungsschale, in die zwei nebeneinander verlaufende Reihen von Verstärkungsvorrichtungen mit jeweils einer Anordnung von zwei Verstärkungsteilen, die zueinander X-förmig gelegen sind, eingebracht sind, wobei in der Figur 10a die zwei Verstärkungsteile jeweils einer Verstärkungsvorrichtung dargestellt sind, wobei die Verstärkungsvororichtungen derart angeordnet sind, dass sich die Verstärkungsteile der verschiedenen Verstärkungsvorrichtungen in der Längsrichtung ihres Verlaufs gesehen einander kämmen und reissverschlussartig zueinander angeordnet sind,
▪ Figur 11 einen Querschnitt eines Bereichs der Beplankungsschale mit einem schublastaufnehmende kernschichtfreien Anschlussbereich mit dem inneren Hautabschnitt, einem äußeren Hautabschnitt und einer monolithischen Zwischenschicht, wobei an dem an dem Anschlussbereich ein Bereich der Beplankungsschale verläuft, in dem Rippenanordnungs-Verstärkungsprofile in den Schublastaufnehmende Kernschicht eingesetzt sind, und
▪ Figur 12 eine Draufsicht auf einen Abschnitt des Beplankungsschalen-Bereichs nach der Figur 11.

Die erfindungsgemäß vorgesehene Beplankungsschale B oder Beplankungsplatte ist als haupt-tragendes oder hauptlast-tragendes Verkleidungsteil oder Beplankungsteil eines Strömungskörpers und insbesondere eines aerodynamischen Körpers vorgesehen. Die Figur 1 a zeigt eine schematische Draufsicht auf ein Strukturbauteil 1 oder einen Abschnitt eines Seitenleitwerks als Beispiel des erfindungsgemäßen Strömungskörpers oder aerodynamischen Körpers. Das Strukturbauteil 1 ist aus einer Trägerstruktur T und einer diese umgebenden und mit dieser verbundenen Beplankungsschale B gebildet. Erfindungsgemäß ist die Beplankungsschale B als Sandwich und aus einem inneren Hautabschnitt 11, einem äußeren Hautabschnitt 12 sowie einer zwischen diesen gelegenen schublast-aufnehmenden Kernschicht 13 oder einem zwischen diesen gelegenen schublast-aufnehmenden Schaumkem gebildet (Figur 3a). Der innere Hautabschnitt 11 und der äußere Hautabschnitt 12 kann jeweils aus Fiberglas oder aus einem kohlenstoff-basierten Material gebildet sein und insbesondere ein Faserverbundkunststoff sein. Der innere Hautabschnitt 11 und der äußere Hautabschnitt 12 erstreckt sich jeweils über die Beplankungsschale B. Unter der Bezeichnung "innerer Hautabschnitt 11" wird in Bezug auf deren Lage und Orientierung ein Hautabschnitt verstanden, der auf der Innenseite der Beplankungsschale B gelegen und somit einem von der Beplankungsschale B abzudeckenden Inneren oder Innenraum eines Strukturbauteils 1 oder eines Strömungskörpers zugewandt ist. Bei der Verwendung des Strukturbauteils 1 für einen Strömungskörper ist die "äußere Hautabschnitt 12" der bestimmungsgemäß am Strömungskörper anliegenden Strömung zugewandt.

Die Figur 1b zeigt einen Schnitt entlang der in der Figur 1 a eingetragenen Linie V2-V2 und zeigt einen Teil eines Strömungskörpers 1, der aus zwei zueinander beabstandeten Beplankungsschalen B gebildet, von denen eine erste Beplankungsschale B1 und eine zweite Beplankungsschale B2 entlang zueinander und beabstandet voneinander verlaufen. Deren Außenflächen bilden die Strömungsflächen des Strömungskörpers 1. Der Strömungskörper 1 kann z.B. Teil eines Seitenleitwerks oder Seitenruders oder Teil eines Flügels oder einer Stellklappe sein. Bei der Ausführung des Strömungskörpers 1 als Seitenleitwerk oder Seitenruder sind die Außenseiten der Beplankungsschalen B1, B2 vorzugsweise achsensymmetrisch zueinander gebildet. Bei der Ausführung des Strömungskörpers 1 als Flügel oder einer Stellklappe können die Außenseiten der Beplankungsschalen B1, B2 achsensymmetrisch oder nicht symmetrisch zueinander gebildet sein. Insbesondere kann bei einer derartigen Verwendung des Strömungskörpers 1 an einem Flugzeug bei einer angenommenen Strömungsrichtung U für eine bei einer solchen Verwendung bestimmungsgemäßen Hauptumströmung beispielsweise die Außenseite der ersten Beplankungsschale B1 die Saugseite und die Außenseite der zweiten Beplankungsschale B2 die Druckseite des Strömungskörpers bilden.

In der Figur 1b ist nur ein Teil des Strömungskörpers 1 dargestellt, der in der Breitenrichtung oder Tiefenrichtung B-S gesehen von Randseiten oder Rand-Endstücken R1, R2 begrenzt ist, die von sich in der Längsrichtung L-S erstreckenden Trägerbauteilen 5 bzw. 6 der Trägerstruktur T gebildet werden. An den Trägerbauteilen 5, 6 sind Rippen oder Rippen-Anordnungen R derart befestigt, dass diese sich beabstandet voneinander zwischen den Trägerbauteilen 5 und 6 erstrecken. Die Rippen oder Rippen-Anordnungen R dienen als Versteifungsbauteile für die Beplankungsschalenteile B1 bzw. B2. Die Beplankungsschalenteile B1 bzw. B2 können an ihren in der Breiten-Richtung B-S des Strukturbauteils 1 gelegenen Enden als Randbereiche 60 ausgebildet sein, die z. B. abschnittsweise keine Kernschicht 13 aus Schaum aufweisen, wie diese an Hand der Figuren 11 und 12 beschrieben werden. An den Beplankungsschalenteilen B1 bzw. B2 können sich in der Breiten-Richtung B-S des Strukturbauteils 1 gesehen hintereinander eine oder mehrere Beplankungsschalenteile B1 bzw. B2 anschließen, wobei insbesondere zwei Beplankungsschalenteile B1 bzw. B2 an jeweils einer 5, 6 angebracht sein können. Alternativ kann sich ein Beplankungsschalenteil B1, B2 auf jeder oder einer der Seiten in Bezug auf die Dickenrichtung D-S von mehr als zwei Trägerbauteilen 5, 6 gehalten werden. Dabei weist also der Strömungskörper 1 von mehr als zwei jeweils voneinander in der Breitenrichtung B-S voneinander beabstandet verlaufenden Trägerbauteilen 5, 6 auf, und erstreckt sich jedes der Beplankungsschalenteile B1 bzw. B2 zwischen den zwei in Bezug auf die Bereitenrichtung äußeren Trägerbauteile 5, 6 und über zumindest ein weiteres Trägerbauteil hinweg.

Die schublastaufnehmende Kernschicht 13 kann generell bei der Erfindung bzw. den verschiedenen Aspekten der Erfindung als Massivkern oder als Schaumkem gestaltet sein. In der Ausführungsform der Kernschicht als Massivkern kann die Kernschicht aus einem Kunststoff und insbesondere aus Polyethylen und/oder Polybuthylen gebildet sein. Alternativ oder zusätzlich kann die Kernschicht aus Plexiglas gebildet sein. In der Ausführungsform der Kernschicht als Schaumkem kann die Kernschicht aus einem PVC-Schaum oder einem geschäumten Plexiglas gebildet sein.

Die Trägerstruktur T kann insbesondere gebildet sein aus (Figuren 1 a und 3a): zumindest zwei jeweils entlang einer Längsrichtung L-S des Strukturbauteils 1 und in einem Abstand in Tiefenrichtung oder Querrichtung Q-S des Strukturbauteils 1 nebeneinander verlaufenden Trägerbauteilen oder Trägerprofilen 5, 6 und zumindest einer zwischen und quer zu diesen verlaufenden und entlang ihrer Längsrichtung L-R mit der Beplankungsschale B verbundenen Rippen-Anordnung R zur flächigen Abstützung der Beplankungsschale B an der Trägerstruktur T. Die Breite der Versteifungsrippen der Rippen-Anordnung R erstreckt sich in der Tiefenrichtung T-S des Strukturbauteils 1. In Längsrichtung L-S des Strukturbauteils 1 können die Trägerbauteile 5, 6 mittels jeweils einem Endabschnitt E1 bzw. E2 verbunden sein. Die Trägerbauteile 5, 6 können insbesondere Längsversteifungs-Bauteilkomponenten oder Längsspante oder Holme sein. Wenn beispielsweise der Strömungskörper ein Flugzeugteil ist, können die Trägerbauteile 5, 6 Längsspante oder Holme eines Rumpfs, eines Tragflügels, eines Seitenleitwerks, einer Stellklappe oder einer Höhenflosse sein. Jede der Rippen-Anordnungen R oder zumindest eine von mehreren Rippen-Anordnungen R der Trägerstruktur T weist auf: ein Flanschteil 22, das entlang der Rippen-Längsrichtung L-R flächig mit der Beplankungsschale verbunden ist, und eine daran anschließende und von dem Flanschteil 22 bzw. der Beplankungsschale B in seiner Querrichtung oder Tiefenrichtung T-R der Rippen-Anordnung R abstehende Rippe 21. Das Flanschteil 22 erstreckt sich über eien Länge L14 in der quer zur Längsrichtung L-R verlaufenden Breiten-Richtung B-R der Rippen-Anordnung R. Die Rippe 21 und das Flanschteil 22 können einstückig hergestellt sein. Insbesondere kann vorgesehen sein, dass die Rippe 21 und das Flanschteil 22 jeweils getrennt oder zusammen als ein Bauteil als Faserverbundkunststoff hergestellt ist. In die Figuren 1a and 1b ist auch ein auf die Beplankungsschale bezogenes Koordinatensystem mit der Beplankungsschalen-Längsrichtung L-B, der Beplankungsschalen-Querrichtung B-B und der Beplankungsschalen-Dickenrichtung D-B, als Achsen eingetragen.

Die Figur 1 a zeigt auch Zwischenbereiche oder mit den erfindungsgemäß vorgesehenen Verstärkungs-Vorrichtungen 10 zu verstärkende Bereiche des Schaumkerns.

Da die Beplankungsschale B auf der Trägerstruktur T zur Ausbildung einer Außenseite des Strömungskörpers befestigt ist und insofern wesentlich für die Herstellung einer Umströmung des Strömungskörpers ist, ist die Beplankungsschale B eine hauptlast-tragende Strukturkomponente des Strukturbauteils 1.

Die erfindungsgemäße hauptlast-tragende Beplankungsschale B kann insbesondere zur Herstellung eines solchen Strukturbauteils 1 angewendet werden. Da die Beplankungsschale B auf der Trägerstruktur T zur Ausbildung einer Außenseite des Strömungskörpers befestigt ist und insofern wesentlich für die Herstellung einer Umströmung des Strömungskörpers ist und dabei die äußeren Luftkräfte aufnimmt sowie in vorbestimmten Umfang die Wirkungen von auf die Beplankungsschale B auftreffenden Gegenständen kompensieren soll, ist die Beplankungsschale B eine hauptlast-tragende Strukturkomponente des Strukturbauteils 1. Bei der Kompensation von Wirkungen von auf die Beplankungsschale B auftreffenden Gegenständen wird mit der erfindungsgemäßen Beplankungsschale B erreicht, dass die Beplankungsschale B nach dem Auftreffen der Gegenstände als insgesamt stabiles Gebilde erhalten bleibt, das danach weiterhin die Strömungskräfte aufnimmt.

Die Figur 3a zeigt eine Ausführungsform einer erfindungsgemäßen Kombination einer Trägerstruktur mit einer T-förmigen Rippen-Anordnung R und einer Beplankungsschale 22, die nach der Erfindung mit einem inneren, einem äußeren Hautabschnitt 11 bzw. 12 sowie einer zwischen diesen gelegenen schublast-aufnehmenden Kernschicht 13 gestaltet ist. Die Figur 3a ist eine Schnittdarstellung eines Bereichs S3 des Strömungskörpers 1 der Figuren 1 a und 1 b, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer Beplankungsschale B ist. Die Beplankungsschale B ist nach einem Ausführungsbeispiel der Erfindung mit einem in Bezug auf den Strömungskörper 1 inneren Hautabschnitt 11 und einem äußeren Hautabschnitt 12 sowie einer zwischen diesen gelegenen schublast-aufnehmenden Kernschicht 13 gebildet. Erfindungsgemäß können in die Kernschicht 13 seitlich der Rippen-Anordnung R Verstärkungsteile und/oder Verstärkungs-Vorrichtungen 10 oder Rippenanordnungs-Verstärkungsprofilteile eingesetzt sein. Generell kann die Trägerstruktur T auch eine Stützanordnung, lediglich eine Rippe 21 ohne plattenförmiges Verbindungsstück 22 aufweisen, oder eine Stützanordnung sein, die lediglich ein plattenförmiges Verbindungsstück 22 aufweist.Erfindungsgemäß kann dabei vorgesehen sein, dass in der Beplankungsschale B entlang eines quer zur Rippenanordnungs-Längsrichtung L-R verlaufenden Beplankungsschalen-Abschnitts, der einen Anschlussbereich 14 der Trägerstruktur T, also z. B. eines Trägerbauteils 5, 6 und/ oder der Rippen-Anordnung R an der Beplankungsschale B bildet, ein oder mehrere Profilträger oder Rippenanordnungs-Verstärkungsprofilteile V0 eingebracht oder integriert sind. Beispielsweise sind zur Verstärkung der Beplankungsschale B im Anschlussbereich eines Trägerbauteils 5, 6 an derselben oder im Anschlussbereich einer Stützanordnung oder Rippenanordnung R Profilträger als Trägerbauteil-Verstärkungsprofilträger oder - Verstärkungsprofilteile bzw. Rippenanordnungs-Verstärkungsprofilträger oder - Verstärkungsprofilteile angeordnet. Der Anschlussbereich 14 ist derjenige Bereich der Beplankungsschale B in dessen flächiger Erstreckung, der in der Dickenrichtung D-B der Beplankungsschale B gesehen den Bereich überdeckt oder schneidet, den die Trägerstruktur T oder das Trägerbauteil 5, 6 bzw. die Stütz- oder Rippen-Anordnung R mit ihrer der Beplankungsschale B zugewandten Seite umgrenzt oder in deren Grenzen die jeweilige Trägerstruktur T an der Beplankungsschale B anliegt. Die der Beplankungsschale B zugewandte Seite der Trägerstruktur T ist im gezeigten Ausführungsbeispiel mit der Rippen-Anordnung R die der Beplankungsschale B zugewandte Seite des Flanschteils der Rippen-Anordnung R. Die Profilträger V0 verbinden das Flanschteil 22 oder den inneren Hautabschnitt 11 und den äußeren Hautabschnitt 12 zur Stabilisierung der Beplankungsschale B bei Beschädigung derselben von außen miteinander.

Der zumindest eine oder die Profilträger V0 können als längliche oder plattenförmige Verstärkungsprofilträger ausgebildet sein. Dabei können sich die Profilträger V0 in einer Referenz-Längsrichtung erstrecken, die in der Längserstreckung der jeweiligen Trägerstruktur T gerichtet ist. Die Längserstreckung der Trägerbauteile nach der Figur 1a verläuft entlang des an diesem anliegenden Randbereichs der Beplankungsschale B, so dass in dieser Hinsicht die Referenz-Längsrichtung der Profilträger V0 entlang des Randbereichs der Beplankungsschale B verläuft. Die Referenz-Längsrichtung einer Stützanordnung oder einer Rippenanordnung R verläuft in Richtung der Längserstreckung derselben und insbesondere entlang der Stützanordnungs- bzw. Rippenanordnungs-Längsrichtung L-R, d.h. parallel zu der Stützanordnungs- bzw. Rippenanordnungs-Längsrichtung L-R oder schräg zu dieser. Bei dem Vorsehen von mehreren Profilträgern V0 können diese insbesondere in einer Referenz-Längsrichtung gesehen, die im gezeigten Ausführungsbeispiel die Rippenanordnungs-Längsrichtung L-R ist, nebeneinander angeordnet sein und nebeneinander verlaufen.

Die Referenz-Längsrichtung ist dabei die Erstreckungsrichtung eines mittels der Profilträger V0 zu verstärkenden oder für Belastungsfälle zu stabilisierenden Bereichs. Insbesondere kann der zur verstärkende oder zu stabilisierende Bereich der Anschlussbereich einer Trägerstruktur T wie eines Trägerbauteils 5, 6 oder einer Rippenanordnung R sein. Dieser kann insbesondere der Verbindungsbereich von Flanschteil 22 und der Beplankungsschale B sein. Durch das Vorsehen der Profilträger V0 werden in dem der Rissbildungen in der Kernschicht 13 aufgrund von größeren Spannungen in der Kernschicht 13, die sich durch äußere Belastungen in diesem Bereich ergeben, vermieden und/oder lokal aufgehalten. Berechnungen und umfangreiche Versuche haben den positiven Effekt dieser erfindungsgemäßen Lösungsmaßnahme aufgezeigt.

Unter der Rippenanordnungs-Längsrichtung L-R ist dabei die Richtung zu verstehen, die entlang der Längserstreckung der Beplankungsschale B und der Längsrichtung der Rippe 21 verläuft. Bei dem Vorsehen mehrerer Rippen kann die Rippenanordnungs-Längsrichtung L-R insbesondere entlang der Längsrichtung einer dieser Rippen oder einer Hauptrippe verlaufen. Unter der Rippenanordnungs-Querrichtung Q-R ist diejenige Richtung zu verstehen, die senkrecht zu der Rippenanordnungs-Längsrichtung L-R und die quer zur Längserstreckung der Beplankungsschale B und in Breitenrichtung, also der Haupterstreckung der Rippe 21 verläuft. In der Figur 3a ist auch die Rippenanordnungs-Breitenrichtung B-R gezeigt, die senkrecht zu der Rippenanordnungs-Längsrichtung L-R und der Rippenanordnungs-Querrichtung Q-R gerichtet ist.

Bei dieser Ausführungsform der Erfindung mit einer an einer Beplankungsplatte befestigten Trägerstruktur T kann das Anschlussteil 22 zur Befestigung desselben mit der Beplankungsschale flächig mit dem inneren Hautabschnitt verklebt sein. Zusätzlich oder alternativ dazu kann das Anschlussteil mit der Beplankungsschale mit dem inneren Hautabschnitt mittels Verbindungselementen wie insbesondere Nieten verbunden sein, wie dies in den Figuren 4a, 4b, 4c gezeigt ist.

Bei dem in der Figur 3a gezeigten Ausführungsbeispiel sind mehrere Rippenanordnungs-Verstärkungsprofilteile V0 in der Rippenanordnungs-Breitenrichtung B-R gesehen hintereinander bzw. in der Rippenanordnungs-Längsrichtung L-R gesehen nebeneinander angeordnet. In der Figur 3a ist eine Ausführungsform der Rippen-Anordnung R gezeigt, bei der über den gesamten Verbindungsbereich von Flanschteil 22 und der Beplankungsschale B Rippenanordnungs-Verstärkungsprofilteile V0 verteilt sind. In dem in der Figur 3a dargestellten Querschnitt eines Ausführungsbeispiels der Rippen-Anordnung R sind insgesamt zehn Rippenanordnungs-Verstärkungsprofilteile V0 in der Rippenanordnungs-Längsrichtung L-R gesehen nebeneinander gelegen. In der Figur 3a sind die an den in der Rippenanordnungs-Längsrichtung L-R gesehen jeweils äußeren Verstärkungsprofilträger V0 mit den Bezugzeichen V1, V3 bzw. V2, V4 bezeichnet. Generell können die Rippenanordnungs-Profilteile V0 insbesondere in gleichmäßigen Abständen im gesamten Bereich des Flanschteils 22 oder über einen Abschnitt des Flanschteils 22 verteilt sein

Bei einer in der Figur 3b dargestellten Ausführungsform des Verstärkungsprofilträgers V0 kann dieser (Bezugszeichen VA) aus zwei Profilplatten VA-1, VA-2, von denen einer mit dem inneren Hautabschnitt 11 und der jeweils andere mit dem äußeren Hautabschnitt 12 verbunden ist, und einer diese verbindenden Stützrippe VA-3 gebildet sein, so dass dessen Profilquerschnitt ein Doppel-T-Profilquerschnitt ist.

Bei einer in der Figur 3c dargestellten Ausführungsform des Verstärlcungsprofilträgers V0 kann dieser (Bezugszeichen VB) derart ausgeführt sein, dass der Profilquerschnitt des Verstärkungsprofilträgers ein Kasten-Profilquerschnitt ist. Dabei kann der Verstärkungsprofilträger VB aus zwei Profilplatten VB-1, VB-2, von denen einer mit dem inneren Hautabschnitt 11 und der jeweils andere mit dem äußeren Hautabschnitt 12 verbunden ist, und zwei diese verbindenden Stützrippen VB-3, VB-4 zur Bildung eines Kasten-Profilquerschnitts gebildet sein.

In der Figur 4a ist eine Schnittdarstellung des Bereichs S3 des Strömungskörpers der Figuren 1 a und 1 b gezeigt, die entlang der in den Figuren 1 a und 1 b jeweils eingetragenen Linie V3-V3 den zu dieser jeweils eingetragenen Blickrichtung in Form zweier Pfeile gebildet ist und die eine schematische Schnittdarstellung einer erfindungsgemäßen Kombination einer Trägerstruktur mit einer T-förmigen Rippen-Anordnung und einer mit einem inneren, einem äußeren Hautabschnitt 11, 12 sowie einer zwischen diesen gelegenen schublast-aufnehmenden Kernschicht 13 gestalteten Beplankungsschale B, bei der das Anschlussteil 22 mit der Beplankungsschale B mit dem inneren Hautabschnitt 12 mittels Verbindungselementen 16 befestigt ist. Beispielartig ist die Lage der Verbindungselemente 16 mit den Positionslinien 15a und 15b gezeigt. Insbesondere kann vorgesehen sein, dass in der von der Längsrichtung L-B und der Dickenrichtung D-B aufgespannten Ebene gesehen seitlich der Rippe 21 Verbindungselemente 16 das Anschlussteil 22 und den äußeren Hautabschnitt 12 verbinden, die insbesondere jeweils zumindest eine in der Breitenrichtung B-B verlaufende Reihe von Verbindungselementen 16 bilden können. Die Reihen können insbesondere auch parallel zueinander verlaufen. Auch können die Reihen von in regelmäßigen Abständen voneinander beabstandeten Verbindungselementen 16 gebildet sein.

Wie an Hand der Ausführungsform nach der Figur 4b gezeigt, müssen insbesondere im Bereich des Anschlussbereichs 14 keine Profilträger wie gemäß der Ausführungsform nach der Figur 3a zwischen den Hautabschnitten 11,12 angeordnet sein. Die Anordnung von Verbindungselementen 16 zur Verbindung des Anschlussteils 22 mit dem äußeren Hautabschnitt 12 kann wie an Hand des Ausführungsbeispiels nach der Figur 4a vorgesehen sein.

Als Beispiel für das erfindungsgemäß verwendbare Verbindungselement 16 ist in der Figur 4c ein Niet dargestellt, der das Anschlussteil 22 an den Hauptabschnitt 12 befestigt.

Im Anschlussbereich kann insbesondere vorgesehen sein, dass der innere Hautabschnitt, an dem das Anschlussteil 22 anliegt, eine größere Materialdicke aufweist, als der innere Hautabschnitt seitlich des Anschlussbereichs. Nach einer Ausführungsform der Erfindung kann diese Verdickung in Bezug auf dessen flächiger Erstreckung in einem Bereich sein, der um maximal das 10fache der Dicke der Beplankungsschale von dem Randverlauf des Anschlussbereichs abweicht. Diese Dickenvergrößerung kann durch das Anordnen weiterer Schichten in diesem sich flächig erstreckenden Bereich auf die der Kernschicht und/oder auf die der Außenseite der Beplankungsschale zugewandte Oberfläche des inneren Hautabschnitts realisiert sein.

In der Ausführungsform der Kombination der Beplankungsschale B und eines Trägerbauteils 5, 6 und/ oder der Rippen-Anordnung R an der Beplankungsschale B nach der Figur 4a sind in dem Anschlussbereich 14 der Beplankungsschale B und optional in der Breitenrichtung B-R seitlich neben diesem Verstärkungsteile 10a, 10b, oder Verstärkungsvorrichtungen 10 insbesondere nach einer erfindungsgemäß vorgesehenen und/oder hierin beschriebenen Art angeordnet. Dabei können Verstärkungsteile 10a, 10b oder Verstärkungsvorrichtungen 10 in einer Reihe in der Breitenrichtung B-R der Rippenanordnung gesehen oder in der Breitenrichtung des Trägerbauteils gesehen nebeneinander und/ oder in der Längsrichtung L-R der Rippenanordnung bzw. in der Längsrichtung des Trägerbauteils angeordnet sein. In diesen Fällen können, wie es in der Figur 4a dargestellt ist, auch Paare von Verstärkungsteilen 10a, 10b in jeweils X-förmiger Anordnung in die Beplankungsschale B eingebracht sein. Die Verstärkungsteile verlaufen generell in der Dickenrichtung der Beplankungsschale B oder schräg zu dieser und können dabei innerhalb der Kernschicht 13 derart gelegen sein, dass ihre Enden F1 zu den Hautabschnitten 11, 12 beabstandet sind oder eines ihrer Enden F1 zu einem der Hautabschnitte 11, 12 beabstandet ist, oder die Verstärkungsteile können derart gelegen sein, dass diese den inneren und den äußeren Hautabschnitt 11, 12 jeweils verbinden, also in den inneren und/ oder äußeren Hautabschnitt 11, 12 teilweise eindringen. Der innere Hautabschnitt 51 und/oder der äußere Hautabschnitt 52 kann jeweils aus mehreren Hautlagen gebildet und/oder zumindest ein Teil der Verstärkungs-Vorrichtungen 10, 10a, 10b, 10c, 10d; 10e, 10f können derart angeordnet sein, dass deren Enden F1 oder eines der Enden F1 derselben den inneren Hautabschnitt 51 und/oder den äußeren Hautabschnitt 52 jeweils zumindest die erste Hautlage durchragen. Generell durchragen also die Verstärkungsteile zumindest teilweise die schublast-aufnehmende Kernschicht 13.

Durch die Anordnung der Verstärkungs-Vorrichtung 10 entlang der Rippen-Anordnung R wird erreicht, dass sich Beschädigungen der Beplankungsschale B z. B. in Form von Rissen in der schublast-aufnehmenden Kernschicht 13 im Bereich der Rippen-Anordnung R nicht oder in reduziertem Maße auf den sich neben der Rippen-Anordnung R erstreckenden flächigen Bereich der Beplankungsschale B übertragen. Auch wird umgekehrt durch die Anordnung der Verstärkungs-Vorrichtung 10 entlang der Rippen-Anordnung R erreicht, dass sich Beschädigungen der Beplankungsschale B z.B. in Form von Rissen in der schublast-aufnehmenden Kernschicht 13 im neben der Rippen-Anordnung R erstreckenden flächigen Bereich der Beplankungsschale B auf den im Bereich der Rippen-Anordnung R gelegenen Bereich der Beplankungsschale B nicht oder in reduziertem Maße übertragen.

Nach einem Ausführungsbeispiel des erfindungsgemäßen Strukturbauteils 1 sind zwischen in der Rippenanordnungs-Längsrichtung L-R gesehen nebeneinander gelegenen Rippenanordnungs-Verstärkungsprofilteilen V0 der Rippen-Anordnung R zumindest eine Verstärkungs-Vorrichtung 10 angeordnet. Vorzugsweise liegen der innere Hautabschnitt 11 und der äußere Hautabschnitt 12 an den Rippenanordnungs-Verstärkungsprofilteilen V0 an, so dass diese von den Rippenanordnungs-Verstärkungsprofilteilen V0 abgestützt werden. Nach dem in der Figur 3a gezeigten Ausführungsbeispiel sind in der Rippenanordnungs-Querrichtung Q-R gesehen zwischen den äußeren Rippenanordnungs-Verstärkungsprofilteilen V1 und V3 bzw. V2 und V4 Verstärkungs-Vorrichtungen 10 nach der Erfindung angeordnet. Diese Konstellation kann in der Rippenanordnungs-Längsrichtung L-R mehrfach hintereinander vorgesehen sein. Auch kann zwischen mehreren, also z.B. zwischen zwei, drei oder vier äußeren Rippenanordnungs-Verstärkungsteilen jeweils zumindest eine Verstärkungs-Vorrichtung 10 nach der Erfindung angeordnet sein. Dabei können die Verstärkungs-Vorrichtung 10 und die jeweils zugeordneten Rippenanordnungs-Verstärkungsteile auch in der Rippenanordnungs-Querrichtung Q-R gesehen versetzt zueinander angeordnet sein. Bei diesen Ausführungsbeispielen treten diese Konstellationen vorzugsweise in der Rippenanordnungs-Längsrichtung L-R hintereinander liegend wiederholt auf und können sich über die Länge der Rippen-Anordnung R in der Beplankungsschale B verteilen.

Bei der erfindungsgemäßen Kombination einer Beplankungsschale B und einer Rippenanordnung R können auch Verstärkungsteile und/oder zumindest eine Verstärkungsvorrichtung 10 anstelle von Rippenanordnungs-Verstärkungsprofilteilen V0 in die Beplankungsschale nach einer der hierin beschriebenen Arten angeordnet sein.

In der Figur 3a ist schematisch eine Rissbildung im Schaumkem 13 dargestellt: ein Gegenstand schlägt mit einem Impuls F auf der Beplanungsschale B auf, Die dabei entstehenden Risse im Schaumkem 13 sind mit den Bezugszeichen F3 und F4 gezeigt.

Bei den erfindungsgemäß vorgesehenen Ausführungsformen der Beplankungsschale B können die Verstärkungs-Vorrichtungen 10 generell jeweils aus zumindest einem Verstärkungsteil gebildet sein. Dabei kann ein Verstärkungsteil als stiftförmiges Verstärkungsteil mit z.B. runder oder rechteckiger Querschnittsform ausgeführt sein.

Die Verstärkungsvorrichtungen 10 sind jeweils aus zumindest einem Verstärkungsteil 10a, 10b, 10c, 10d, 10e, 10f gebildet. Ein solches Verstärkungsteil 10a, 10b, 10c, 10d, 10e, 10f kann insbesondere als längliches und/ oder plattenförmiges Element gebildet sein. Die Verstärkungsteile 10a, 10b, 10c, 10d, 10e, 10f somit insbesondere pinförmig oder nadelförmig gestaltet sein. In den Figuren 2, 5a, 5b, 9, 10a, 10b sind die jeweils dargestellten Verstärkungsteile 10a, 10b, 10c, 10d, 10e, 10f mit den Bezugszeichen 10a, 10b, 10e oder 10f bezeichnet.

Nach einer weiteren, in der Figur 5c dargestellten erfindungsgemäßen Ausführungsform der Kombination der Beplankungsschale B und eines Trägerbauteils 5, 6 und/ oder der Rippen-Anordnung R an der Beplankungsschale B kann vorgesehen sein, dass in dem Anschlussbereich 14 der Beplankungsschale B und optional in der Breitenrichtung B-R seitlich neben diesem Verstärkungsteile 10a, 10b, 10c, 10d, 10e, 10f oder Verstärkungsvorrichtungen 10 insbesondere nach einer erfindungsgemäß vorgesehenen und/oder hierin beschriebenen Art angeordnet sind. Dabei ist insbesondere vorgesehen, dass in dem Anschlussbereich 14 keine Profilteile eingesetzt sind (Figur 5c). Dabei können Verstärkungsteile 10a, 10b, 10c, 10d, 10e, 10f oder Verstärkungsvorrichtungen 10 in einer Reihe in der Breitenrichtung B-R der Rippenanordnung oder in der Breitenrichtung des Trägerbauteils nebeneinander und/ oder in der Längsrichtung L-R der Rippenanordnung bzw. in der Längsrichtung des Trägerbauteils angeordnet sein. In diesen Fällen können, wie es in der Figur 5c dargestellt ist, auch Paare von Verstärkungsteilen 10a, 10b, 10c, 10d, 10e, 10f in jeweils X-förmiger Anordnung in die Beplankungsschale B eingebracht sein.

Die Verstärkungsteile verlaufen generell in der Dickenrichtung der Beplankungsschale B oder schräg zu dieser und können dabei innerhalb der Kernschicht 13 derart gelegen sein, dass ihre Enden F1 zu den Hautabschnitten 11, 12 beabstandet sind oder eines ihrer Enden F1 zu einem der Hautabschnitte 11, 12 beabstandet ist, oder die Verstärkungsteile können derart gelegen sein, dass diese den inneren und den äußeren Hautabschnitt 11, 12 jeweils verbinden, also in den inneren und/ oder äußeren Hautabschnitt 11, 12 teilweise eindringen. Der innere Hautabschnitt 51 und/oder der äußere Hautabschnitt 52 kann jeweils aus mehreren Hautlagen gebildet und/oder zumindest ein Teil der Verstärkungs-Vorrichtungen 10, 10a, 10b, 10c, 10d; 10e, 10f können derart angeordnet sein, dass deren Enden F1 oder eines der Enden F1 derselben den inneren Hautabschnitt 51 und/oder den äußeren Hautabschnitt 52 jeweils zumindest die erste Hautlage durchragen. Generell durchragen also die Verstärkungsteile zumindest teilweise die schublast-aufnehmende Kernschicht 13.

Die Verstärkungsteile können insbesondere derart in der Beplankungsschale B gelegen sein, dass der Winkel zwischen der Längsrichtung des jeweiligen Verstärkungsteils und der Dickenrichtung der Beplankungsschale an dieser Stelle innerhalb eines Bereichs zwischen 45 Grad und 10 Grad liegt.

Die nach der Erfindung vorgesehenen Verstärkungsvorrichtungen 10 können generell in einer Referenz-Längsrichtung gesehen, die im gezeigten Ausführungsbeispiel die Rippenanordnungs-Längsrichtung L-R ist, hintereinander angeordnet sein. Weiterhin können Verstärkungsteile V auch quer zur Referenz-Längsrichtung bzw. Rippenanordnungs-Längsrichtung L-R gesehen hintereinander angeordnet sein. Dabei können Verstärkungsvorrichtungen 10 in mehreren nebeneinander verlaufenden Reihen von Verstärkungsvorrichtungen 10 angeordnet sein. Solche Reihen von Verstärkungsvorrichtungen 10 können auch einander kämmend (Figur 10b) angeordnet sein, bei denen die Verstärkungsvorrichtungen 10 sich in ihrer Erstreckung in der Referenz-Längsrichtung bzw. Rippenanordnungs-Längsrichtung L-R überlappen, wobei die Verstärkungsvorrichtungen 10 auch in der Referenz-Längsrichtung bzw. Rippenanordnungs-Längsrichtuhg L-R beabstandet gelegen sein können. Es können also insbesondere mehrere Reihen von Verstärkungsteilen nebeneinander verlaufen.

Die Referenzrichtung hinsichtlich der Anordnung von Verstärkungsvorrichtungen 10 oder Verstärkungsteilen ist die Erstreckungsrichtung eines mittels einer Mehrzahl von Verstärkungsvorrichtungen 10 bzw. Verstärkungsteilen zu verstärkenden oder für Belastungsfälle zu stabilisierenden Bereichs. Dieser Bereich wird nachfolgend auch als Verstärkungsbereich oder Zwischenbereich Z bezeichnet. Insbesondere kann der zur verstärkende oder zu stabilisierende Bereich z.B. seitlich oder innerhalb und/oder entlang eines Anschlussbereichs eines Trägerteils wie einer Rippenanordnung oder entlang eines Randbereichs verlaufen und dabei ein Übergangsbereich von dem Anschlussbereich bzw. dem Randbereich in den flächigen Ersteckungsbereich der Beplankungsschale B sein, in dem Rissbildungen in der Kernschicht 13 aufgrund von sich in diesem Bereich ergebenden größeren Spannungen in der Kernschicht 13 vermieden oder lokal aufgehalten werden. Berechnungen und umfangreiche Versuche haben den positiven Effekt auch dieser erfindungsgemäßen Lösungsmaßnahme aufgezeigt.

Bei dem in der Figur 3a dargestellten Ausführungsbeispiel einer Anbringung der Beplankungsschale B an einer Rippenanordnung R und in den Figuren 4a, 5a, 5b, 9, 10a, 10b dargestellten Verstärkungsteilen sind diese jeweils schematisch als Strichlinie gestrichelt dargestellt, wobei im dargestellten Schnitt mit durchgezogenem Strich in der Schnittfläche befindliche Verstärkungsteile und mit gestricheltem Strich in einer von dieser Schnittebene beabstandeten Schnittebene angeordnete Verstärkungsteile dargestellt sind.

Generell können die sind Verstärkungsteile bzw. die Verstärkungsvorrichtungen entlang der genannten Referenz-Längsrichtung hintereinander und in einer Reihe oder in mehreren Reihen nebeneinander angeordnet sein. Bei dem in der Figur 3a dargestellten Ausführungsbeispiel sind Verstärkungsteile entlang der genannten Referenz-Längsrichtung und z. B. der Rippenanordnungs-Längsrichtung L-R hintereinander angeordnet. Dabei können die pinförmigen Elemente in einer geraden Linie hintereinander oder in der Rippenanordnungs-Längsrichtung L-R gesehen versetzt zueinander gelegen sein, d.h. auch einen Abstand zueinander quer zur Längserstreckung der Beplankungsschale B haben.

Bei dieser Ausführungsform der Figur 1 a ist weiterhin vorgesehen, dass Verstärkungsteile 10a, 10b innerhalb von zwei Seitenbereichen Z1, Z2 der Beplankungsschale B angeordnet sind, die in Rippenanordnungs-Längsrichtung L-R und seitlich entlang der seitlichen Enden des Beplankungsschalen-Abschnitts 14 verlaufen und deren Breite sich jeweils quer zur Rippenanordnungs-Längsrichtung L-R und in der Längserstreckung der Beplankungsschale B erstreckt.

Alternativ oder zusätzlich kann vorgesehen sein, dass Verstärkungsteile 10a, 10b in einem Verstärkungsbereich eingebracht sind, die innerhalb des Beplankungsschalen-Abschnitts 14 und seitlich entlang der seitlichen Enden des Beplankungsschalen-Abschnitts 14 in die Kernschicht 13 gelegen sind. In der Figur 3a sind solche Gruppen von Verstärkungsteilen mit dem Bezugszeichen V3 und V4 bezeichnet.

Generell können die Ausführungsformen der erfindungsgemäßen Beplankungsschale B zur Beeinflussung von Schubspannungen und zur Vermeidung von Rissbildungen in der Kernschicht 13 eine Mehrzahl von zumindest in einem Verstärkungsbereich oder Zwischenbereich Z der Beplankungsschale B angeordneten Verstärkungsteilen oder erfindungsgemäß definierten Verstärkungs-Vorrichtungen 10 aufweisen, die jeweils aus einer Kombination von zumindest zwei in einem zusammenhängenden Volumenteil V (Figur 2) der Beplankungsschale B angeordneten Verstärkungsteilen gebildet sind. Der zumindest eine Zwischenbereich Z der Beplankungsschale B ist in Größe und Lage derart gewählt, dass dieser die gesamte Beplankungsschale B aufgrund der im gegebenen Anwendungsfall vorgesehenen äußeren Belastungen stabilisiert, indem die in dem jeweiligen Zwischenbereich Z aufgrund dieser Belastungen entstehenden Schubspannungen durch das Vorhandensein der Verstärkungsteile nicht zur Rissbildung in der Kernschicht 13 dieses Zwischenbereichs Z führen oder eine Rissbildung aufhalten. Dabei ist die Lage und Größe des zumindest einen Zwischenbereichs Z und die Art der Anordnung der Verstärkungsteile darin vorzugsweise so gewählt, dass nicht nur innerhalb, sondern auch außerhalb des Zwischenbereichs Z die Gefahr der Rissbildung in der Kernschicht 13 der Beplankungsschale B minimiert wird. Die Lage und Größe des zumindest einen Zwischenbereichs Z hängt dabei vom Anwendungsfall, d.h. der Gestalt des gesamten Strukturbauteils mit der Beplankungsschale B, mit den zugehörigen angenommenen äußeren Belastungen ab.

Nach einer Ausführungsform der Erfindung können die Verstärkungsteile der Verstärkungsvorrichtungen 10 gruppenweise angeordnet sein. Dabei kann insbesondere vorgesehen sein, dass die Verstärkungsteile 10a, 10b, 10c, 10d oder 10e, 10f einer Verstärkungs-Vorrichtung 10 gruppenweise in jeweils einem von mehreren Volumenteilen V der Beplankungsschale B angeordnet sind (Figur 2), wobei generell jede Gruppe von Verstärkungsteilen 10a, 10b, 10c, 10d oder 10e, 10f in jeweils einem fiktiven Volumenteil V jeweils aus einer Kombination von zumindest zwei Verstärkungsteilen 10a, 10b, 10c, 10d oder 10e, 10f gebildet ist. Somit sind in jeweils einem zusammenhängenden Volumenteil V der Beplankungsschale B eine Gruppe von Verstärkungsteilen angeordnet. Die Verstärkungsteile 10a, 10b, 10c, 10d oder 10e, 10f einer Gruppe derselben haben jeweils eine ähnliche Lage oder Orientierung innerhalb der Beplankungsschale B und haben jeweils mit einer Abweichung von maximal 30 Grad dieselbe Orientierung relativ zur Dickenrichtung D-B der Beplankungsschale B. Insbesondere kann weiterhin vorgesehen sein, dass die Ausrichtungen der Verstärkungsteile einer Gruppe relativ zu den weiteren Koordinatenrichtungen L-B, B-B der Beplankungsschale B zyklisch vorgesehen sind.

Ein Beispiel einer Gruppe von vier Verstärkungsteilen 10a, 10b, 10c, 10d mit einer untereinander zyklischen Orientierung ist in der Figur 2 dargestellt. In der Figur 2 ist ein Ausführungsbeispiel eines solchen fiktiven Volumenteils V in Form eines Quaders mit den Kantenlinien K dargestellt. Zur Orientierung ist in der Figur 2 auch die Längsrichtung L-Z des Zwischenbereichs Z sowie das Koordinatensystem der Beplankungsschale mit deren Koordinatenachsen L-B, B-B und D-B dargestellt. Die Anordnung der Verstärkungs-Vorrichtungen 10 ist insbesondere in der Längsrichtung L-Z des Zwischenbereichs Z hintereinander vorgesehen. In dem Ausführungsbeispiel nach der Figur 2 ist die dort dargestellte Verstärkungs-Vorrichtung 10 aus einer Kombination von vier Verstärkungsteilen 10a, 10b, 10c, 10d gebildet, wobei bei der Kombination der Verstärkungsteile 10a, 10b, 10c, 10d diese jeweils mit einer Abweichung von maximal 10 Grad dieselbe Orientierung in Bezug auf die Dickenrichtung D-B der Beplankungsschale B haben und wobei die Ausrichtungen der Verstärkungsteile in Bezug auf die weiteren Koordinatenrichtungen L-B, B-B der Beplankungsschale B zyklisch ist.

Dabei können die Verstärkungs-Vorrichtungen 10 oder eine Mehrzahl von Verstärkungs-Vorrichtungen 10 nach der Erfindung generell auf einer entlang, d.h. parallel oder winklig, zu der Referenzlinie oder der Rippenanordnungs-Längsrichtung L-R verlaufenden gedachten Linie hintereinander und/oder auch quer zur Rippen-Längsrichtung L-R gesehen versetzt zueinander gelegen sein.

In einem speziellen Fall kann eine Gruppe von Verstärkungsteilen aus zwei Verstärkungsteilen 10e, 10f gebildet sein, die in der genannten Referenz-Längsrichtung gesehen in etwa X-förmig zueinander angeordnet sind. Bei dieser Ausführungsform der Beplankungsschale B ist also zumindest ein Teil der Verstärkungs-Vorrichtungen 10 aus Paaren von Verstärkungsteilen 10a, 10b, 10c, 10d; 10e, 10f gebildet, deren Verstärkungsteile in Richtung einer Längserstreckung der Beplankungsschale B gesehen paarweise X-förmige Orientierungen aufweisen. Bei einer solchen Gruppe von X-förmigen Verstärkungsteilen können die beiden Verstärkungsteile voneinander beabstandet angeordnet sein oder auch aneinander anliegen oder als kreuzförmiges Gebilde in die Beplankungsschale B eingebracht sein. Beispielsweise sind mehrere Paare der auf jeweils einer der beiden Seiten Z1, Z2 gelegenen Verstärkungs-Vorrichtungen 10 derart zueinander orientiert, dass jeweils eines dieser Paare eine in der Rippenanordnungs-Längsrichtung L-R gesehen X-förmige Verstärkungsvorrichtung bildet.

Die Verstärkungs-Vorrichtungen 10 können in verschiedener Weise gestaltet und ausgeführt sein. Nach einem erfindungsgemäßen Ausführungsbeispiel ist vorgesehen, dass die Verstärkungs-Vorrichtungen 10 aus einer Mehrzahl von Kombinationen von pinförmigen Verstärkungsteilen 10e, 10f gebildet sind, die in der Rippenanordnungs-Längsrichtung L-R gesehen hintereinander gelegen sind, wobei jedes Paar von Verstärkungsteilen 10e, 10f in einem erfindungsgemäßen Volumenteil V angeordnet ist. Auch können ein Teil oder sämtliche der in einer Beplankungsschale B oder einem Bereich derselben eingebrachten Verstärkungsteile nadelförmig gestaltet sein. Weiterhin können die Verstärkungsteile an einem ihrer Enden oder an beiden ihrer Enden jeweils mit einer fußartigen Verbreiterung oder einem Haken versehen sein, die bzw. der zur Positionierung und/oder räumlichen Fixierung oder Verankerung innerhalb der Beplanungsschale B vorgesehen sein kann. Ein Vorteil dieser Gestaltung von Verstärkungsteilen kann darin liegen, dass bei dem Auftreten einer äußeren dynamischen Schadensbelastung die jeweiligen Verstärkungsteile in der Beplankungsschale B fixiert bleiben.

Alternativ dazu können die Verstärkungs-Vorrichtungen aus einer Mehrzahl von Kombinationen von plattenförmigen Verstärkungsteilen (nicht in den Figuren gezeigt) gebildet sein, die sich jeweils in ihrer ersten Längserstreckung zwischen dem zwischen dem inneren Hautabschnitt 11 und dem äußeren Hautabschnitt 12 erstrecken und sich durch die zwischen diesen gelegenen schublast-aufnehmenden Kernschicht 13 hindurch erstrecken. Diese plattenförmigen Verstärkungsteile erstrecken sich in ihrer senkrecht zu der ersten Längserstreckung verlaufenden Längserstreckung in der Rippenanordnungs-Längsrichtung L-R.

Die z.B. pinförmigen oder plattenförmigen Verstärkungsteile 10e, 10f insbesondere von jeweiligen Paaren derselben können dabei aneinander anliegen. Auch können pinförmigen oder plattenförmigen Verstärkungsteile 10e, 10f insbesondere von jeweiligen Paaren derselben in der Rippenanordnungs-Längsrichtung L-R voneinander beabstandet sein. Nach einem Ausführungsbeispiel kann dabei vorgesehen sein, dass der Abstand der pinförmigen oder plattenförmigen Verstärkungsteile 10e, 10f jeweils eines Paares derselben maximal das 1,5-fache Dicke der Beplankungsschale B an der jeweiligen Stelle beträgt.

Bei der Ausbildung der Verstärkungs-Vorrichtungen als plattenförmige Verstärkungsteile können zwei oder mehrere derselben auch in der Rippenanordnungs-Längsrichtung L-R gesehen jeweils ineinander greifend angeordnet sind.

Bei den Ausführungen der Verstärkungs-Vorrichtungen 10 nach der Erfindung können die Verstärkungs-Vorrichtungen 10 oder eine Mehrzahl derselben sich auch durch den inneren Hautabschnitt 11 und dem äußeren Hautabschnitt 12 hindurch erstrecken oder in diesen jeweils mit einem Endabschnitt verankert sein. Alternativ oder zusätzlich können Verstärkungs-Vorrichtungen 10 oder eine Mehrzahl derselben mit ihren jeweiligen den Hautabschnitten zugewandten Endabschnitten an dem inneren Hautabschnitt 11 und dem äußeren Hautabschnitt 12 anliegen oder in einem Abstand zu diesen jeweils enden.

Generell kann vorgesehen sein, dass zumindest ein Teil der Verstärkungs-Vorrichtungen 10; 10a, 10b, 10c, 10d; 10e, 10f derart in der Beplankungsschale B angeordnet sind, dass deren Enden F1 den inneren Hautabschnitt 11 und/oder den äußeren Hautabschnitt 12 jeweils zumindest teilweise durchragen, wie dies in den Figuren 5a, 5b, 7, 8, 9, 10a, 10b und 11 gezeigt ist. Der innere Hautabschnitt 11 oder 51 (Figur 11) und/oder der äußere Hautabschnitt 12 oder 52 (Figur 11) können jeweils aus mehreren Hautlagen gebildet sein (nicht in den Figuren gezeigt). Dabei kann insbesondere vorgesehen sein, dass zumindest ein Teil der Verstärkungs-Vorrichtungen 10a, 10b, 10c, 10d derart in der Beplankungsschale B angeordnet ist, dass deren Enden F1 den inneren Hautabschnitt 11 bzw. 51 und/oder den äußeren Hautabschnitt 12 bzw. 52 jeweils zumindest teilweise durchragen.

Die Verstärkungsteile können nach der Erfindung generell aus einem metallischen Material und/oder aus einem nicht-metallischen Material und insbesondere aus einem Faserverbund-Kunststoff gebildet sein. Als nicht-metallisches Material kann Carbon, Fiberglas, Quarz, Kevlar und/oder Keramik verwendet werden.

Nach einer weiteren Ausführungsform des erfindungsgemäßen Strukturbauteils weist die schublast-aufnehmende Kernschicht 13 zumindest einen Kernschicht-Verstärkungsbereich 37 und vorzugsweise eine Mehrzahl von Kernschicht-Verstärkungsbereichen 37 auf (Figur 4), mit der bzw. mit denen mehrere in der Längserstreckung der schublast-aufnehmenden Kernschicht 33 oder der Schaumschicht nebeneinander angeordnete schublast-aufnehmenden Kernschicht-Abschnitte 33a verbunden werden. Jeder Kernschicht-Verstärkungsbereich 37 erstreckt sich in einer Längsrichtung L-V (Figur 3) quer zur Längserstreckung der schublast-aufnehmenden Kernschicht 13 durch diesen hindurch und verläuft dabei zwischen dem inneren Hautabschnitt 11 und dem äußeren Hautabschnitt 12. In der Figur 3a ist ein Ausführungsbeispiel des erfindungsgemäßen Strukturbauteils dargestellt, wobei mit gestrichelten Linien die Randlinien der einzelnen schublastaufnehmenden Kernschicht-Abschnitten 33a bzw. der Verlauf der Kernschicht-Verstärkungsbereiche 37 angezeigt sind. In der Ausführungsform des Strukturbauteils nach der Figur 3a sind die Verläufe der Kernschicht-Verstärkungsbereiche 37 derart vorgesehen, dass sich rechteckige schublast-aufnehmende Kernschicht-Abschnitte 33a ergeben oder dass sich umgekehrt die Kernschicht aus Kernschicht-Abschnitten 33a zusammensetzt, die über Kernschicht-Verstärkungsbereiche 37 miteinander verbunden sind. Dabei kann insbesondere vorgesehen sein, dass der Kemschicht-Verstärkungsbereich 37 mit dem inneren Hautabschnitt 11 und dem äußeren Hautabschnitt 12 verbunden ist, so dass der Kernschicht-Verstärkungsbereich 37 an dem inneren Hautabschnitt 11 und dem äußeren Hautabschnitt 12 befestigt sind.

Nach einer Ausführungsform der Beplankungsschale B beträgt die Dicke 17a des Kernschicht-Verstärkungsbereichs 37 zwischen dem 0,1- und dem 2,0-fachen der Breite der Beplankungsschale B an dieser Stelle, wobei die Dicke senkrecht zur Längserstreckung der Beplankungsschale gemessen ist.

Durch in dem Kernschicht-Verstärkungsbereich 37 eingebrachte Verstärkungsvorrichtung 10 kann die Übertragung einer Beschädigung der Beplankungsschale B insbesondere in Form von Rissen in der schublastaufnehmenden Kernschicht von einer Seite des Kernschicht-Verstärkungsbereichs 37 auf die jeweils andere Seite des Kernschicht-Verstärkungsbereichs 37 effektiver verhindert oder aufgehalten werden.

Der Verstärkungsbereich ist aus einem Material gebildet, das eine mindestens zweifache Steifigkeit aufweist als die schublastaufnehmende Kernschicht 13. Dabei kann der Kernschicht-Verstärkungsbereich 37 insbesondere aus Harz gebildet sein.

Bei einer erfindungsgemäßen Ausführungsform der Beplankungsschale B mit einer Rippen-Anordnung R kann auch vorgesehen sein, dass mehrere nach einer Ausführungsform der Erfindung ausgeführte und entlang der Rippenanordnungs-Längsrichtung L-R hintereinander gelegene Verstärkungsteile 10 den zumindest einen Kernschicht-Verstärkungsbereich 37 jeweils durchragen. Der Kernschicht-Verstärkungsbereich 37 kann sich insbesondere in seiner Längsrichtung entlang der Rippenanordnungs-Längsrichtung L-R und entlang eines Abschnitts oder entlang der gesamten Länge der Rippen-Anordnung R erstrecken. Der Kernschicht-Verstärkungsbereich 37 kann dabei parallel oder winklig zur Rippenanordnungs-Längsrichtung L-R verlaufen. Zumindest ein Kernschicht-Verstärkungsbereich 37 mit an diesem angeordneten Verstärkungsvorrichtungen kann insbesondere in zumindest einem der zwei in Rippenanordnungs-Längsrichtung L-R verlaufenden Seitenbereiche Z1, Z2 vorgesehen sein.

An derartigen Verstärkungsbereichen 37 kann eine Mehrzahl von Verstärkungsvorrichtungen 10 nach einer Ausführungsform der Erfindung angeordnet sein. In der Figur 7 ist ein Ausführungsbeispiel dargestellt, bei der eine Anordnung oder ein Paar von Verstärkungsteilen 10 bzw. 10e, 10f in einer X-förmigen Anordnung einen Kernschicht-Verstärkungsbereich 37 durchragen, wobei jeweils ein Mittelabschnitt eines Verstärkungsteile 10e, 10f innerhalb des Kernschicht-Verstärkungsbereichs 17 gelegen ist. In der Figur 7 sind die zwei Verstärkungsteile einer X-förmigen Anordnung derselben mit den Bezugszeichen 10e und 10f versehen. Insbesondere kann vorgesehen sein, dass eine Mehrzahl von X-förmigen Anordnungen von Verstärkungsteilen 10 in der Längsrichtung des Kernschicht-Verstärkungsbereichs 37 als Referenz-Längsrichtung hintereinander angeordnet sind und dabei aneinander anschließend oder anliegend und/oder in Abständen zueinander.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 37 hintereinander gelegene X-förmige Anordnungen 10-1, 10-2 angeordnet sind, wobei auf beiden Seiten des Kernschicht-Verstärkungsbereichs 37 hintereinander gelegene X-förmige Anordnungen 10-1, 10-2 angeordnet sind. In der Figur 8 ist ein Ausführungsbeispiel dargestellt, bei der an derselben Stelle in der Längsrichtung des Kernschicht-Verstärkungsbereichs 17 und in Bezug auf dieser einander gegenüber liegend jeweils eine X-förmige Anordnung oder ein Paar 10-1, 10-2 von Verstärkungsteilen 10 angeordnet ist. Bei der hierin bezeichneten "X-förmigen" Anordnung von Verstärkungsteilen sind diese insbesondere in der jeweiligen Referenz-Längsrichtung beabstandet voneinander angeordnet, so dass in den Figuren 7 und 8 sowie auch in den Figuren 9, 10a und 10b eine der Verstärkungsvorrichtung des jeweils dargestellten Paars von Verstärkungsvorrichtungen gestrichelt gezeichnet ist, um anzuzeigen, dass sich diese Verstärkungsvorrichtung hinter der jeweiligen Zeichenebene befindet. In der Figur 8 sind die zwei Verstärkungsteile einer X-förmigen Anordnung derselben mit den Bezugszeichen 10e und 10f versehen. In der Darstellung der Figur 8 verläuft die Längsrichtung des Kernschicht-Verstärkungsbereichs 37 vom Betrachter der Figur 8 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 37. Bei dem gezeigten Ausführungsbeispiel durchragen die jeweils am Kernschicht-Verstärkungsbereich 37 gelegenen Enden der Verstärkungsteile einen Bereich des Kernschicht-Verstärkungsbereichs 37. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 37 zugewandten Enden in einem Abstand von maximal der einfachen Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 37 gesehen abwechselnd auf der einen und der dieser gegenüberliegenden anderen Seite des Kernschicht-Verstärkungsbereichs 37 gelegen sein.

Insbesondere bei einer X-förmigen Anordnung von jeweils zwei Verstärkungsteilen kann insbesondere vorgesehen sein, dass die zwei Verstärkungsteile 10 10f aneinander anliegen oder dass die zwei Verstärkungsteiles 10e, 10f an ihren jeweils mittleren Abschnitten miteinander verbunden sind. So kann z. B. eines der Verstärkungsteile 10e, 10f eine Aufnahme wie z. B. eine Bohrung aufweisen, mit der das jeweils zweite Verstärkungsteil aufgenommen wird. Dabei kann die Verbindung der beiden Verstärkungsteile 10e, 10f derart vorgesehen sein, dass diese drehfest miteinander verbunden sind, um insbesondere in der schublast-aufnehmenden Kernschicht 13 auftretende Schubspannungen aufzunehmen und/oder darin auftretende Risse aufzuhalten oder zu verhindern. Die an Hand der Figuren 7 und 8 beschriebenen Ausführungsbeispiele der Erfindung bewirken, dass sich Schäden im Schublastaufnehmende Kernschicht 13, falls diese auf einer ersten der Seiten des Kernschicht-Verstärkungsbereichs 37 auftreten, nicht durch über den Kernschicht-Verstärkungsbereichs 37 zu einer zweiten, der ersten Seite gegenüber liegenden Seite hinüberwandern kann.

Generell können die Anordnung und/oder Gestaltung der Verstärkungs-Vorrichtungen für die verschiedenen Aspekte der Erfindung gleich ausgeführt sein. Generell kann vorgesehen sein, dass zumindest ein Teil der Verstärkungs-Vorrichtungen 10; 10a, 10b, 10c, 10d; 10e, 10f derart im Kernschicht-Endbereich 56 angeordnet sind, dass deren Enden F1 den inneren Hautabschnitt 11 und/oder den äußeren Hautabschnitt 12 jeweils zumindest teilweise durchragen, wie dies in den Figuren 5a, 5b, 7, 8, 9, 10a, 10b und 11 gezeigt ist. Der innere Hautabschnitt 11 oder 51 (Figuren 6 bis 10) und/oder der äußere Hautabschnitt 12 oder 52 (Figuren 6 bis 10) können jeweils aus mehreren Hautlagen gebildet sein (nicht in den Figuren gezeigt). Dabei kann insbesondere vorgesehen sein, dass zumindest ein Teil der Verstärkungs-Vorrichtungen 10a, 10b, 10c, 10d derart in der Beplankungsschale B angeordnet ist, dass deren Enden F1 den inneren Hautabschnitt 11 bzw. 51 und/oder den äußeren Hautabschnitt 12 bzw. 52 jeweils zumindest teilweise durchragen.

Alternativ oder zusätzlich kann vorgesehen sein, dass mehrere Verstärkungsteile 10; 10a, 10b, 10c, 10d; 10e, 10f den Verstärkungsbereich 37 jeweils zumindest teilweise durchragen. Dabei kann insbesondere vorgesehen sein, dass jeweils ein Ende F2 eines Verstärkungsteils den Verstärkungsbereich 37 durchragt oder in diesen eingesetzt ist (Figuren 4, 5 und 8).

Wie in den Figuren 9, 10a und 10b dargestellt ist, können in der Beplankungsschale B mit oder ohne Verstärkungsbereich 37 entlang einer Referenz-Längsrichtung eine Mehrzahl von Verstärkungsvorrichtungen angeordnet sein, wobei jede Verstärkungsvorrichtung aus eine Gruppe von Verstärkungsteilen 10a, 10b, die insbesondere eine X-förmige Anordnung haben, gebildet sei kann. Dabei kann eine Mehrzahl von X-förmig angeordneten Verstärkungsteil-Paaren in der Referenz-Längsrichtung hintereinander angeordnet sein (Figur 9). Wie diese in der Figur 10a und 10b gezeigt ist, können auch mehrere Reihen von derartige Verstärkungsvorrichtungen 10 angeordnet sein, wobei die Reihen von Verstärkungsvorrichtungen quer zur Referenz-Längsrichtung gesehen nebeneinander angeordnet sind. In der Figur 10b ist gezeigt, dass nebeneinander angeordnete Reihen von Verstärkungsvorrichtungen 10-1, 10-2 diese derart angeordnet ausgeführt sein können, dass sich die Längserstreckung von Verstärkungsteilen, deren Enden aufeinander zulaufen, in der Referenz-Längsrichtung gesehen einander überlappen.

Nach einem Aspekt der Erfindung ist ein Strömungskörper mit einem Strukturbauteil nach einer der beschriebenen Ausführungsformen vorgesehen. Das Strukturbauteil ist nach der Erfindung ein hauptlast-tragendes Strukturteil und somit ist auch die Beplankungsschale wie auch die Rippen-Anordnung eine hauptlast-tragende Strukturteil-Komponente.

Ein weiterer Aspekt der Erfindung bezieht sich auf den sich flächig zwischen Rippen-Anordnungen R erstreckenden Bereich der Beplankungsschale B und wird nachfolgend an Hand eines in den Figuren 6a und 6b dargestellten Ausführungsbeispiels beschrieben. Danach ist ein Strukturbauteil 1 eines Strömungskörpers mit zumindest einer Beplankungsschale B zur Bildung einer Strömungsfläche an der Außenseite des Strukturbauteils 1 und einer Trägerstruktur T zur Befestigung der jeweiligen Beplankungsschale B vorgesehen, wobei die Beplankungsschale B - wie voranstehend beschrieben an Hand der Figuren 1 bis 5 beschrieben ist - als Sandwich und aus einem inneren Hautabschnitt 31, einem äußeren Hautabschnitt 32 sowie einer zwischen diesen gelegenen schublastaufnehmende Kernschicht 33 oder einer Schaumschicht gebildet ist, der den inneren und den äußeren Hautabschnitt 31, 32 flächig miteinander verbindet (Figuren 7, 8). Dabei ist die sich zwischen den Trägerbauteilen T und der Rippen-Anordnung R erstreckende und zwischen dem inneren und dem äußeren Hautabschnitt 31, 32 gelegene schublast-aufnehmende Kernschicht 33 aus mehreren in der Längserstreckung der schublast-aufnehmenden Kernschicht 33 oder der Schaumschicht nebeneinander angeordneten schublast-aufnehmenden Kernschicht-Abschnitten 33a gebildet. Die schublast-aufnehmenden Kernschicht-Abschnitte 33a sind miteinander jeweils an den einander anliegenden Seiten durch einen Kemschicht-Verstärkungsbereich 37 verbunden, der sich in seiner Längsrichtung L-V (Figur 6) quer zur Längserstreckung der schublast-aufnehmende Kernschicht 33 durch diesen hindurch erstreckt.

Der Verlauf der Kernschicht-Verstärkungsbereiche 37 in der Längserstreckung der Beplankungsschale B und somit der Kernschicht-Abschnitte 33a können verschiedenartig vorgesehen sein. Die Kernschicht-Abschnitte 33a entsprechend dem Verlauf der Kernschicht-Verstärkungsbereiche 37 in der Längserstreckung der Beplankungsschale B sind bei der Ausführungsform nach der Figur 6a schachbrettartig und bei der Ausführungsform nach der Figur 6b gegenüber einer Schachbrett-Anordnung in einer Längsrichtung versetzt zueinander angeordnet. Generell verlaufen die Kernschicht-Verstärkungsbereiche 37 in der Längserstreckung der Beplankungsschale B gesehen derart, dass diese auf einen Seitenrand oder auf eine Ecke von quaderförmig vorgesehenen Kernschicht-Abschnitten 33a auftreffen.

Der Kernschicht-Verstärkungsbereich 37 kann dabei zwischen dem inneren Hautabschnitt 31 und dem äußeren Hautabschnitt 32 verlaufen. Dabei kann insbesondere vorgesehen sein, dass der Kernschicht-Verstärkungsbereich 37 mit dem inneren Hautabschnitt 31 und dem äußeren Hautabschnitt 32 verbunden ist, so dass der Kernschicht-Verstärkungsbereich 37 an dem inneren Hautabschnitt 31 und dem äußeren Hautabschnitt 32 befestigt sind. Der Kernschicht-Verstärkungsbereich 37 kann insbesondere aus einem Material gebildet sein, das eine mindestens zweifache Steifigkeit aufweist als der Kernschicht-Verstärkungsbereich 37. Nach einer Ausführungsform der Beplankungsschale B beträgt die Dicke 17a des Kernschicht-Verstärkungsbereichs 37 zwischen dem 0,1- und dem 2,0-fachen der Breite der Beplankungsschale B an dieser Stelle, wobei die Dicke senkrecht zur Längserstreckung der Beplankungsschale gemessen ist.

Der Kernschicht-Verstärkungsbereich 37 kann insbesondere aus Harz gebildet sein. In der Figur 6 ist ein Ausführungsbeispiel des erfindungsgemäßen Strukturbauteils dargestellt, wobei mit gestrichelten Linien die Randlinien der einzelnen schublastaufnehmenden Kernschicht-Abschnitten 33a bzw. der Verlauf der Kernschicht-Verstärkungsbereiche 37 angezeigt sind.

In diesem Zusammenhang kann die Trägerstruktur T insbesondere aus zumindest zwei jeweils entlang einer Längsrichtung L-S des Strukturbauteils 1 verlaufenden Trägerbauteilen 5, 6 (nicht in der Figur 6 gezeigt) und zumindest einer mit der Beplankungsschale B verbundenen Rippen-Anordnung R zur flächigen Abstützung der Beplankungsschale B an der Trägerstruktur T gebildet sein (Figuren 1a, 1b).

Die Rippen-Anordnung R kann insbesondere in Bezug auf ihren Querschnitt T-förmig gestaltet sein. Ein Ausführungsbeispiel einer erfindungsgemäßen Rippen-Anordnung R ist in der Figur 2 dargestellt und weist auf: eine Rippe 21 und ein daran anschließendes Flanschteil 22, das mit einem Oberflächenbereich der Beplankungsschale B verbunden und an diesem befestigt ist. Die Länge des Flanschteils 22 erstreckt sich in einer Rippenanordnungs-Längsrichtung L-R und die Breite des Flanschteils 22 verläuft in einer Rippenanordnungs-Querrichtung Q-R, wobei die Rippe 21 von dem Flanschteil 22 in einer Rippenanordnungs-Breitenrichtung B-R absteht, die senkrecht zu der Rippenanordnungs-Längsrichtung L-R und der Rippenanordnungs-Querrichtung Q-R gerichtet ist (Figur 3).

Die Trägerbauteile 5, 6 können insbesondere nach Ausführungsbeispielen gebildet sein, die an Hand der Figuren 1 und 2 beschrieben worden sind.

In der Ausführungsform des Strukturbauteils nach der Figur 6 sind die Verläufe der Kernschicht-Verstärkungsbereiche 37 derart vorgesehen, dass sich rechteckige Schublastaufnehmende Kernschicht-Abschnitte 33a ergeben. Dabei sind mehrere Kernschicht-Verstärkungsbereiche 37-1, 37-2, 37-3 vorgesehen, die entlang der Rippenanordnungs-Längsrichtung L-R verlaufen. In Bezug auf den Ausdruck "entlang" kann hierbei insbesondere vorgesehen sein, dass zwischen der Orientierung der in der Rippenanordnungs-Längsrichtung L-R verlaufenden Kernschicht-Verstärkungsbereiche 37-1, 37-2, 37-3 eine lokale Winkelabweichung von maximal 30 Grad gegenüber der Orientierung der lokalen Rippenanordnungs-Längsrichtung L-R oder der Längsrichtung der Rippen-Anordnung R auftritt. Die Kernschicht-Verstärkungsbereiche 37 können krummlinig oder geradlinig verlaufen. In der Figur 5 ist die schublast-aufnehmende Kernschicht-Längsrichtung L-V beispielartig nur für einen Kernschicht-Verstärkungsbereich 37 eingetragen. Weiterhin sind quer zu den in der Rippenanordnungs-Längsrichtung L-R verlaufenden Kernschicht-Verstärkungsbereiche 37-1, 37-2, 37-3 verlaufende Kernschicht-Verstärkungsbereiche 37-4 vorgesehen. Somit sind zur Bildung der Beplankungsschale B insbesondere schublastaufnehmende Kernschicht-Abschnitte 33a

Nach einem Ausführungsbeispiel des erfindungsgemäßen Strukturbauteils ist vorgesehen, dass in der schublast-aufnehmenden Kernschicht 33 entlang eines Umgebungsbereichs Z einer Mehrzahl von Kernschicht-Verstärkungsbereichen 37 der Beplankungsschale B erfindungsgemäße Verstärkungs-Vorrichtungen integriert sind (in der Figur 6 ist beispielsweise ein derartiger Umgebungsbereich oder Zwischenbereich mit dem Bezugszeichen Z versehen). Dabei sind die Verstärkungs-Vorrichtungen 10 in der Längsrichtung L-V des Verstärkungsbereichs oder entlang der Längsrichtung des Zwischenbereichs Z hintereinander angeordnet. Dabei kann in einer sich zwischen jeweils zwei Rippen-Anordnungen R erstreckenden Beplankungsschale B vorgesehen sein, dass entlang und auf beiden Seiten der darin verlaufenden Kernschicht-Verstärkungsbereichen 37 in den schublast-aufnehmende Kernschicht 33 der Beplankungsschale B Verstärkungs-Vorrichtungen 10 integriert sind. Generell kann sich der Umgebungsbereich Z für die Anordnung der Verstärkungs-Vorrichtungen 10 sich entlang von dessen Längserstreckung auf beiden Seiten des Kernschicht-Verstärkungsbereichs 37 und bis zu einer Entfernung von maximal der doppelten Dicke der Beplankungsschale B an der jeweiligen Stelle des Kernschicht-Verstärkungsbereichs 37 erstreckt.

Die Verstärkungs-Vorrichtungen 10 können zusammen mit dem Kernschicht-Verstärkungsbereich 33 in der Beplankungsschale B integriert sein, wie dies voranstehend an Hand der Figuren 2 und 3a beschrieben ist, so dass für Komponenten ähnlicher Funktion dieselben Bezugszeichen verwendet werden. In den Figuren 6 und 7 sind zwei Ausführungsformen von neben und entlang von Kernschicht-Verstärkungsbereichen 37 angeordneten Verstärkungs-Vorrichtungen 10 dargestellt. Die Ausführungsformen der in den Figuren 7 und 8 dargestellten Verstärkungsvorrichtungen 10 und deren Anordnung sind analog der Verstärkungsvorrichtungen 10 und deren Anordnung ausgeführt, wie sie in den Figuren 2 bzw. 3a dargestellt sind. Die Ausgestaltung und Anordnung der Verstärkungsvorrichtungen 10 oder der Verstärkungsteile kann wie in der an Hand der Figuren 3a und 4 beschriebenen Ausführungsformen vorgesehen sein.

In diesem Zusammenhang kann erfindungsgemäß insbesondere vorgesehen sein, dass mehrere nach einer Ausführungsform der Erfindung ausgeführte und entlang der Verstärkungsbereich -Längsrichtung L-V hintereinander gelegene Verstärkungsteile 10 den Kernschicht-Verstärkungsbereich 37 jeweils durchragen. In der Figur 8 ist ein Ausführungsbeispiel dargestellt, bei der eine Anordnung oder ein Paar von Verstärkungsteilen 10e, 10f in einer X-förmigen Anordnung einen Kernschicht-Verstärkungsbereich 37 durchragen, wobei jeweils ein Mittelabschnitt eines Verstärkungsteils 10 innerhalb des Kernschicht-Verstärkungsbereichs 37 gelegen ist. Alternativ oder zusätzlich können Verstärkungsteile 10 auch in der Verstärkungsbereich -Längsrichtung L-V gesehen neben dem Kernschicht-Verstärkungsbereich 37 gelegen sein. In den Figuren 7 und 8 sind die zwei Verstärkungsteile einer X-förmigen Anordnung derselben mit den Bezugszeichen 10e und 10f versehen. Insbesondere kann vorgesehen sein, dass eine Mehrzahl von X-förmigen Anordnungen von Verstärkungsteilen 10 in der Längsrichtung des Kernschicht-Verstärkungsbereichs 17 hintereinander angeordnet sind und dabei aneinander anschließend und/oder in Abständen zueinander.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 37 hintereinander gelegene X-förmige Anordnungen 10-1, 10-2 angeordnet sind, wobei auf beiden Seiten des Kernschicht-Verstärkungsbereichs 37 hintereinander gelegene X-förmige Anordnungen 10-1, 10-2 angeordnet sind. In der Figur 8 ist ein Ausführungsbeispiel dargestellt, bei der an derselben Stelle in der Längsrichtung des Kernschicht-Verstärkungsbereichs 37 und in Bezug auf dieser einander gegenüber liegend jeweils eine X-förmige Anordnung oder ein Paar 10-1, 10-2 von Verstärkungsteilen 10 angeordnet ist. In der Figur 8 sind die zwei Verstärkungsteile einer X-förmigen Anordnung derselben mit den Bezugszeichen 10e und 10f versehen. In der Darstellung der Figur 8 verläuft die Längsrichtung L-V des Kernschicht-Verstärkungsbereichs 17 vom Betrachter der Figur 6 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 17. Bei dem gezeigten Ausführungsbeispiel durchragen die jeweils am Kernschicht-Verstärkungsbereich 37 gelegenen Enden der Verstärkungsteile einen Bereich des Kernschicht-Verstärkungsbereichs 37. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 37 zugewandten Enden in einem Abstand von maximal der Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 37 gesehen abwechselnd auf der einen und der dieser gegenüberliegenden anderen Seite des Kemschicht-Verstärkungsbereichs 37 gelegen sein.

Die an Hand der Figuren 7 bis 10b beschriebenen Ausführungsbeispielen der Erfindung bewirken, dass sich Schäden im Schublastaufnehmende Kernschicht 33, falls diese auf einer ersten der Seiten des Kernschicht-Verstärkungsbereichs 37 auftreten, nicht durch über den Kernschicht-Verstärkungsbereichs 37 zu einer zweiten, der ersten Seite gegenüber liegenden Seite hinüberwandern kann.

Ein weiterer Aspekt der Erfindung bezieht sich auf eine hauptlast-tragende Beplankungsschale B für ein Strukturbauteil 1, die in ihrem sich flächig erstreckenden Innenbereich 50 als Sandwich-Bauteil derart gebildet ist, wie dies voranstehend an Hand der Figuren 1 bis 5 und 5 bis 7 beschrieben ist. Dieser Aspekt der Erfindung wird nachfolgend an Hand der Figuren 9 und 10 beschrieben, die im Innenbereich 50 der Beplankungsschale B zeigt: die als Sandwich-Bauteil ausgeführte Beplankungsschale B mit einem inneren Hautabschnitt 51, einem äußeren Hautabschnitt 52 sowie einem zwischen diesen gelegenen schublast-aufnehmende Kernschicht 53, der den inneren 51 und den äußeren 52 Hautabschnitt flächig miteinander verbindet. Die Eigenschaften dieser Strukturkomponenten sind wie vorstehend beschrieben. Bei der Darstellung der Figuren 9 und 10 werden für einige Bestandteile und Komponenten der jeweils dargestellten Ausführungsform dieselben Bezugszeichen wie in vorgehenden Figuren verwendet, wenn auf die jeweiligen Funktionalitäten oder Eigenschaften Bezug genommen wird.

Die Beplankungsschale B ist zum Anbringen derselben an ein Träger-Bauteil mit einem äußeren Randabschnitt 60 mit einem äußeren Rand 61 ausgebildet, der aufweist: einen entlang des Rands 61 verlaufenden kernschichtfreien Anschlussbereich 63 mit dem inneren Hautabschnitt 51, dem äußeren Hautabschnitt 52 und einer zwischen diesen gelegenen monolithischen Zwischenschicht 65. In dem äußeren Randabschnitt 60 ist ein Übergangsbereich 62 vorgesehen, in dem von dem Innenbereich 50 aus gesehen die schublast-aufnehmende Kernschicht 63 endet, d.h. in dem der äußere Rand 55 der schublast-aufnehmende Kernschicht 53 gelegen ist oder verläuft. Aus dem Vergleich der Figuren 8 und 9 ist entnehmbar, dass der Rand 61 bzw. der Rand 55 entlang der Längsrichtung L-S des Strukturbauteils 1 verläuft und sich der Anschlussbereich 63 von dem Innenbereich 50 aus in der Breitenrichtung B-S des Strukturbauteils 1 erstreckt. In dem Übergangsbereich 62 kann ein Bereich 66 vorgesehen sein, in dem sich die Dicke der monolithischen Zwischenschicht in Richtung zum äußeren Rand 61 zur Verringerung der Querschnittsdicke der Beplankungsschale verringert.

Erfindungsgemäß ist vorgesehen, dass in einem Kernschicht-Endbereich 56 entlang des äußeren Randabschnitts 60 der Beplankungsschale B Verstärkungs-Vorrichtungen 10 integriert sind, die die schublast-aufnehmende Kernschicht 53 durchragen.

Die Verstärkungsvorrichtung kann wie an Hand der Figuren 4 und 5 oder 7 und 8 beschrieben ausgeführt sein. Dabei kann insbesondere eine X-Anordnung von Verstärkungsteilen 10e, 10f verwendet werden. In der Figur 9 sind zwei in der Breitenrichtung B-S des Strukturbauteils 1 hintereinander angeordnete X-Anordnungen 10-1 und 10-2 angeordnet. Generell können in der Breitenrichtung B-S des Strukturbauteils 1 gesehen zumindest ein Verstärkungsteil 10 und insbesondere zumindest eine X-Anordnung von Verstärkungsteilen 10 angeordnet sein. Vorzugsweise sind in der Längsrichtung L-S des Strukturbauteils 1, also entlang des Rands 55 der schublast-aufnehmenden Kernschicht 33 mehrere Verstärkungsvorrichtungen 10 bzw. 10-1 und/oder 10-2 angeordnet.

Alternativ oder zusätzlich dazu kann erfindungsgemäß vorgesehen sein, dass entlang der Rippenanordnungs-Längsrichtung L-R und entlang der Längsrichtung des Kernschicht-Verstärkungsbereichs 17 hintereinander gelegene X-förmige Anordnungen 10-1, 10-2 angeordnet sind, wobei auf beiden Seiten des Kernschicht-Verstärkungsbereichs 17 hintereinander gelegene X-förmige Anordnungen 10-1, 10-2 angeordnet sind. In der Figur 5 ist ein Ausführungsbeispiel dargestellt, bei der an derselben Stelle in der Längsrichtung des Kernschicht-Verstärkungsbereichs 17 und in Bezug auf dieser einander gegenüber liegend jeweils eine X-förmige Anordnung oder ein Paar 10-1, 10-2 von Verstärkungsteilen 10 angeordnet ist. In der Figur 5 sind die zwei Verstärkungsteile einer X-förmigen Anordnung derselben mit den Bezugszeichen 10e und 10f versehen. In der Darstellung der Figur 9 verläuft die Längsrichtung des Kernschicht-Verstärkungsbereichs 17 vom Betrachter der Figur 9 ausgehend senkrecht in die Blattebene hinein und befindet sich eine erste X-förmige Anordnung 10-1 auf der linken Seite und eine zweite X-förmige Anordnung 10-2 auf der rechten Seite des Kernschicht-Verstärkungsbereichs 17. Bei dem gezeigten Ausführungsbeispiel durchragen die jeweils am Kernschicht-Verstärkungsbereich 17 gelegenen Enden der Verstärkungsteile einen Bereich des Kernschicht-Verstärkungsbereichs 17. Alternativ können die Verstärkungsteile einer X-förmigen Anordnung von Verstärkungsteilen auch neben, d.h. in einem Abstand zu dem Verstärkungsbereich gelegen sein. Bei einem Ausführungsbeispiel sind die äußeren, dem Kernschicht-Verstärkungsbereich 17 zugewandten Enden in einem Abstand von maximal der Dicke der Beplankungsschale B an dieser Stelle entfernt gelegen. Bei einer Variante dieser Ausführungsbeispielen können die X-förmigen Anordnungen 10-1, 10-2 in der Längsrichtung des Kernschicht-Verstärkungsbereichs 17 gesehen abwechselnd auf der einen und der dieser gegenüberliegenden anderen Seite des Kernschicht-Verstärkungsbereichs 17 gelegen sein.

Bei einer X-förmigen Anordnung von jeweils zwei Verstärkungsteilen kann insbesondere vorgesehen sein, dass die zwei Verstärkungsteile 10e, 10f aneinander anliegen oder dass die zwei Verstärkungsteiles 10e, 10f an ihren jeweils mittleren Abschnitten miteinander verbunden sind. So kann z.B. eines der Verstärkungsteile 10e, 10f eine Aufnahme wie z.B. eine Bohrung aufweisen, mit der das jeweils zweite Verstärkungsteil aufgenommen wird. Dabei kann die Verbindung der beiden Verstärkungsteile 10e, 10f derart vorgesehen sein, dass diese drehfest miteinander verbunden sind, um insbesondere in der schublast-aufnehmenden Kernschicht auftretende Schubspannungen aufzunehmen.

Die an Hand der Figuren 3a und 4a, 3c beschriebenen Ausführungsbeispiele der Erfindung bewirken, dass sich Schäden in der schublast-aufnehmenden Kernschicht 13, falls diese auf einer ersten der Seiten des Kernschicht-Verstärkungsbereichs 17 auftreten, nicht durch über den Kernschicht-Verstärkungsbereichs 17 zu einer zweiten, der ersten Seite gegenüber liegenden Seite hinüberwandern kann.

Die Beplankungsschale B nach diesem Aspekt der Erfindung kann insbesondere von einer Trägerstruktur T aufgenommen und an dieser befestigt sein, wie es in den Figuren 1a, 1b und 2 bzw. der Figuren 5a, 5b, 5c dargestellt ist. Bei diesem Aspekt der Erfindung kann insbesondere auch vorgesehen sein, dass sich die Beplankungsschale B zwischen Trägerbauteilen 5, 6 und der Rippen-Anordnung R erstreckt, wie dies an Hand der Figuren 1 a und 1 b voranstehend beschrieben worden ist. Optional kann dabei alternativ oder zusätzlich vorgesehen sein, dass die schublast-aufnehmende Kernschicht 53 aus mehreren in der Längserstreckung der schublast-aufnehmenden Kernschicht 53 nebeneinander angeordneten schublast-aufnehmende Kemschicht-Abschnitten (nicht in der Figur 9 oder 10 gezeigt) gebildet ist, wie dies an Hand der Figuren 3a bis 8 beschrieben worden ist. Die schublast-aufnehmende Kernschicht-Abschnitte sind dabei - wie an Hand der Figur 6 beschrieben - miteinander jeweils an den einander anliegenden Seiten durch einen Kernschicht-Verstärkungsbereich 37 verbunden, der sich in der Längsrichtung L-V des Verstärkungsbereichs (Figur 6) quer zur Längserstreckung der schublast-aufnehmenden Kernschicht 33 bzw. 63 durch diesen hindurch erstreckt.

Erfindungsgemäß kann weiterhin vorgesehen sein, dass von dem Innenbereich 60 aus gesehen vor dem schublast-aufnehmenden kernschichtfreien Anschlussbereich 63 ein Zwischenbereich 62 vorgesehen ist, in dem sich die Dicke der schublastaufnehmenden Kernschicht 53 in Richtung zum Rand 55 kontinuierlich verringert unter Ausbildung eines keilförmigen Abschnitts der monolithischen Zwischenschicht 65 zumindest zwischen der dem äußeren Hautabschnitt 52 zugewandten Seite der schublast-aufnehmenden Kernschicht 53 und dem äußeren Hautabschnitt 52 oder zwischen der dem inneren Hautabschnitt 51 zugewandten Seite der schublastaufnehmenden Kernschicht 53 und dem inneren Hautabschnitt 51. Bei dieser Ausführungsbeispiel kann insbesondere vorgesehen sein, dass in einem Kernschicht-Endbereich 56 entlang des äußeren Randabschnitts 30 der Beplankungsschale B Verstärkungs-Vorrichtungen 10; 10e, 10f nach einem hierin beschriebenen Ausführungsbeispiel integriert sind, die die schublast-aufnehmende Kernschicht und teilweise die beiden keilförmigen Abschnitte der monolithischen Zwischenschicht 65 durchragen.

Der Kernschicht-Endbereich 56 für die Anordnung der Verstärkungs-Vorrichtungen kann sich von dem Rand des Kernschichtendes aus bis zu einer Entfernung von maximal der vierfachen Dicke der Beplankungsschale B am Rand des Kernschichtendes erstreckt.

Generell können die Anordnung und/oder Gestaltung der Verstärkungs-Vorrichtungen für die verschiedenen Aspekte der Erfindung gleich ausgeführt sein.

## Patentansprüche

1. Strukturbauteil (1) mit zumindest einer hauptlasttragenden Beplankungsschale, (B) und einer Trägerstruktur (T) zur Befestigung der Beplankungsschale,
wobei die Beplankungsschale (B) als Sandwich und aus einem inneren Hautabschnitt (11), einem äußeren Hautabschnitt (12) sowie einer zwischen diesen gelegenen schublastaufnehmenden Kernschicht (13) gebildet ist, die den inneren und den äußeren Hautabschnitt (11, 12) flächig miteinander verbindet,
dass die Trägerstruktur (T) aus zumindest einem zwischen und quer zu diesen verlaufenden und entlang einer Referenz-Längsrichtung (L-R) mit der Beplankungsschale (B) verbundenen plattenförmigen Anschlussteil (22) gebildet ist, das zur Abstützung der Beplankungsschale (B), die an und außerhalb der Trägerstruktur (T) gelegen und flächig an dem inneren Hautabschnitt (11) anliegend ist, an diesem befestigt ist,
dass in der Beplankungsschale (B) zumindest ein entlang der Referenz-Längsrichtung (L-R) verlaufender Profilträger (V0; V1, V2, V3, V4) zur Ausbildung eines Verstärkungsabschnitts im Anschlussbereich (14) des plattenförmigen Anschlussteils (22) angeordnet ist, der mit dem inneren Hautabschnitt (11) und dem äußeren Hautabschnitt (12) zur Stabilisierung der Beplankungsschale (B) bei Beschädigung derselben verbunden ist und dadurch von außen gegenseitig abstützt,
**dadurch gekennzeichnet,**
**dass** im Anschlussbereich (14) des plattenförmigen Anschlussteils (22) entlang der Referenz-Längsrichtung (L-R) eine Mehrzahl von Verstärkungsteilen (10; 10a, 10b, 10c, 10d; 10e, 10f) integriert ist.

2. Strukturbauteil (1) nach dem Anspruch 1, **dadurch gekennzeichnet, dass** zumindest einige der Verstärkungs-Teile (10; 10a, 10b, 10c, 10d; 10e, 10f) derart in der Kernschicht (13) angeordnet ist, dass deren Enden (F1) den inneren Hautabschnitt (51) und/oder den äußeren Hautabschnitt (52) jeweils zumindest teilweise durchragen, wobei insbesondere der innere Hautabschnitt (11) und der äußere Hautabschnitt (12) jeweils aus mehreren Lagen gebildet ist und wenigstens ein Teil der Verstärkungsteile zumindest eine erste Lage durchdringen.

3. Strukturbauteil (1) nach einem der voranstehenden Ansprüche, **dadurch gekennzeichnet, dass** die Trägerstruktur (T) aus zumindest einer zwischen und quer zu diesen verlaufenden und entlang ihrer Referenz-Längsrichtung (L-R) mit der Beplankungsschale (B) verbundenen Rippen-Anordnung (R) zur flächigen Abstützung der Beplankungsschale (B) an der Trägerstruktur (T) gebildet ist, die aufweist: das sich in einer Rippenanordnungs-Längsrichtung (L-R) erstreckende und als Flanschteil (22) ausgebildete plattenförmige Anschlussteil (22), das mit einem Anschlussbereich (14) des inneren Hautabschnitts (11) der Beplankungsschale verbunden ist, und eine daran anschließende von der Beplankungsschale (B) abstehende und in einer Rippenanordnungs-Längsrichtung (L-R) erstreckende Rippe (21).

4. Strukturbauteil (1) nach einem der voranstehenden Ansprüche, **dadurch gekennzeichnet, dass** das Anschlussteil zur Befestigung desselben mit der Beplankungsschale (B) flächig mit dem inneren Hautabschnitt der Beplankungsschale (B) verklebt oder mittels Verbindungselementen wie insbesondere Nieten verbunden ist.

5. Strukturbauteil (1) nach einem der voranstehenden Ansprüche, **dadurch gekennzeichnet, dass** in einem Zwischenbereich (Z1, Z2) entlang der Referenz-Längsrichtung (L-R) und entlang zumindest eines seitlichen Rands des Beplankungsschalen-Abschnitts (14) Verstärkungsteile (10; 10a, 10b, 10c, 10d; 10e, 10f) integriert sind,
insbesondere, dass sich der Zwischenbereich (Z1, Z2) für die Anordnung der Verstärkungsteile (10; 10a, 10b, 10c, 10d; 10e, 10f) von dem Rand des Anschlussbereichs (14) aus bis zu einer Entfernung von maximal der zehnfachen Dicke der Beplankungsschale (B) von einem Rand des Kernschicht-Endes aus flächig erstreckt.

6. Strukturbauteil (1) nach einem der voranstehenden Ansprüche, **dadurch gekennzeichnet, dass** quer zur Rippenanordnungs-Längsrichtung (L-R) mehrere Verstärkungsprofilträger nebeneinander angeordnet und dass entlang von Verstärkungsprofilen und entlang der Rippenanordnungs-Längsrichtung (L-R) mehrere Verstärkungsteile (10; 10a, 10b, 10c, 10d; 10e, 10f) angeordnet sind.

7. Strukturbauteil (1) nach einem der voranstehenden Ansprüche, **dadurch gekennzeichnet, dass** zumindest ein Verstärkungsprofilträger (V) vorgesehen sind, der aus zwei Profilplatten, von denen einer mit dem inneren Hautabschnitt (11) und der jeweils andere mit dem äußeren Hautabschnitt (12) verbunden ist, und einer diese verbindenden Stützrippe gebildet ist, dessen Profilquerschnitt ein Doppel-T-Profilquerschnitt ist,
insbesondere, dass an den Anschlussbereich (14) definierenden Randabschnitten (R1, R2) jeweils zwei nebeneinander gelegene Verstärkungsprofilträger (V) angeordnet sind, zwischen denen Verstärkungsteile in die Kernschicht (13) eingesetzt sind, und
insbesondere, dass Verstärkungsteile (10; 10a, 10b, 10c, 10d; 10e, 10f) derart eingesetzt sind, dass die Enden jeweils eines Verstärkungsteils (10; 10a, 10b, 10c, 10d; 10e, 10f) jeweils eine am inneren Hautabschnitt (11) gelegene Profilplatte und eine am äußeren Hautabschnitt (12) gelegene Profilplatte nebeneinander gelegener Verstärkungsprofilträger (V) zumindest teilweise durchdringt.

8. Strukturbauteil (1) nach einem der voranstehenden Ansprüche, **dadurch gekennzeichnet, dass** zumindest ein Verstärkungsprofilträger vorgesehen ist, der aus zwei Profilplatten, von denen einer mit dem inneren Hautabschnitt (11) und der jeweils andere mit dem äußeren Hautabschnitt (12) verbunden ist, und zwei diese verbindenden Stützrippen derart gebildet ist, dass der Profilquerschnitt des Verstärkungsprofilträgers ein Kasten-Profilquerschnitt ist,
insbesondere, dass Verstärkungsteile derart eingesetzt sind, dass die Enden jeweils eines Verstärkungsteils jeweils eine am inneren Hautabschnitt (11) gelegene Profilplatte und eine am äußeren Hautabschnitt (12) gelegene Profilplatte desselben Verstärkungsprofilträgers (V) zumindest teilweise durchdringt.

9. Strukturbauteil (1) nach einem der voranstehenden Ansprüche, **dadurch gekennzeichnet, dass** entlang zumindest eines Verstärkungsprofils (V) der Rippenanordnungs-Längsrichtung (L-R) mehrere Verstärkungsteile (10; 10a, 10b, 10c, 10d; 10e, 10f) in der Beplankungsschale (B) integriert sind, die jeweils zumindest 85 % der schublast-aufnehmenden Kernschicht (53) in deren Dickenrichtung durchragen, um die Rissfestigkeit der Beplankungsschale (B) in dem äußeren Randabschnitt zu verbessern.

10. Strukturbauteil (1) nach einem der voranstehenden Ansprüche, **dadurch gekennzeichnet, dass** Verstärkungsteile (10; 10a, 10b, 10c, 10d; 10e, 10f) in der Beplankungsschale (B) in jeweils in einem Volumenteil (V) der Beplankungsschale (B) gelegenen Gruppen von Verstärkungsteilen jeweils als Verstärkungs-Vorrichtungen (10) angeordnet sind, wobei die Volumenteile (V) entlang der Rippen-Längsrichtung (L-R) hintereinander angeordnet sind, wobei jede Gruppe eines Volumenteils (V) jeweils aus einer Kombination von zumindest zwei Verstärkungsteilen (10a, 10b, 10c, 10d; 10e, 10f) gebildet ist, deren Ausrichtungen jeweils maximal 30 Grad von der Dickenrichtung (D-B) der Beplankungsschale (B) abweichen und die in regelmäßiger oder unregelmäßiger Weise um eine Mittelachse des Volumenteils (V) herum angeordnet sind,
insbesondere, dass zumindest ein Teil der Verstärkungs-Vorrichtungen (10) aus Paaren von Verstärkungsteilen (10; 10a, 10b, 10c, 10d; 10e, 10f) gebildet sind, von denen Paare von Verstärkungsteilen in Richtung der Längserstreckung des äußeren Randabschnitts (60) der Beplankungsschale (B) gesehen X-förmig angeordnet sind.

11. Strukturbauteil (1) nach einem der voranstehenden Ansprüche 1 bis 10, **dadurch gekennzeichnet, dass** der Winkel zwischen der Längsrichtung des jeweiligen Verstärkungsteils und der Dickenrichtung der Beplankungsschale an dieser Stelle innerhalb eines Bereichs zwischen 45 Grad und 10 Grad liegt.

12. Strukturbauteil (1) nach einem der Ansprüche 1 bis 11, **dadurch gekennzeichnet, dass** die Verstärkungsteile (10a, 10b, 10c, 10d; 10e, 10f) zumindest teilweise pinförmig gestaltet sind, insbesondere, dass ein Ende von Verstärkungsteilen jeweils mit einer fußartigen Verbreiterung versehen ist.

13. Strukturbauteil (1) nach einem der Ansprüche 1 bis 12, **dadurch gekennzeichnet, dass** Verstärkungsteile (10a, 10b, 10c, 10d; 10e, 10f) nadelförmig gestaltet sind.

14. Strukturbauteil (1) nach einem der vorhergehenden Ansprüche, **dadurch gekennzeichnet, dass** die schublastaufnehmende Kernschicht (13) wenigstens einen insbesondere aus Harz gebildeten Kernschicht-Verstärkungsbereich (17) aufweist, der in zumindest einem der zwei Zwischenbereiche (Z1, Z2) und in Rippenanordnungs-Längsrichtung (L-R) verläuft und sich quer zur Längserstreckung der schublastaufnehmenden Kernschicht (13) durch diese hindurch erstreckt, wobei der Verstärkungsbereich aus einem Material gebildet ist, das eine mindestens zweifache Steifigkeit aufweist als die schublastaufnehmende Kernschicht (13),
insbesondere, dass der Kernschicht-Verstärkungsbereich (17) aus Harz gebildet ist und
insbesondere, dass mehrere der Verstärkungsteile den Kernschicht-Verstärkungsbereich (17) jeweils durchragen.

15. Strömungskörper mit einem Strukturbauteil (1) mit einer hauptlast-tragende Beplankungsschale (B) nach einem der voranstehenden Ansprüche, wobei die hauptlast-tragende Beplankungsschale (B) die Beplankung des Strömungskörpers ist.

## Claims

1. Structural component (1) with at least one main-load-bearing skin shell (B), and a carrier structure (T) for attaching the skin shell,
wherein the skin shell (B) is formed as a sandwich and from an inner skin section (11), an outer skin section (12) and a shear-force-absorbing core layer (13) which is disposed between the two skin sections and which areally connects the inner skin section (11) with the outer skin section (12),
the carrier structure (T) being formed of at least one plate-shaped connection component (22) which extends between and across these and is connected with the skin shell (B) along a reference longitudinal direction (L-R), the plate-shaped connection component (22) being connected to the inner skin section (11) for supporting the skin shell (B) which is disposed at and outside the carrier structure (T) and which is areally abutting the inner skin section (11).
at least one profile carrier (V0; V1, V2, V3, V4) which extends along the reference longitudinal direction (L-R) for forming of a reinforcement section in the connection section (14) of the plate-shaped connection component (22) being arranged in the skin shell (B), the at least one profile carrier being connected to the inner skin section (11) and the outer skin section (12) for stabilization of the skin shell (B) in case of damage of the same and which thereby supports the inner and outer skin section with regard to each other from the outside,
**characterized in that**,
a plurality of reinforcement components (10; 10a, 10b, 10c, 10d; 10e, 10f) is integrated in the connection section (14) of the plate-shaped connection component (22) along the reference longitudinal direction (L-R).

2. Structural component (1) according to claim 1, **characterized in that** at least some of the reinforcement components (10; 10a, 10b, 10c, 10d; 10e, 10f) are disposed in the core layer (13) such that their ends (F1) in each case at least partially penetrate the inner skin section (51) and/or the outer skin section (52), wherein in particular the inner skin section (11) and the outer skin section (12) in each case are formed of several layers and at least a part of the reinforcement components penetrate at least a first layer.

3. Structural component (1) according to one of the preceding claims, **characterized in that** the carrier structure (T) is formed of at least one rib arrangement (R) which extends between and across the same and is connected with the skin shell along its reference longitudinal direction (L-R) for areally supporting the skin shell (B) with respect to the carrier structure (T), wherein the rib arrangement comprises: the plate-shaped connection component (22) which extends in the longitudinal direction (L-R) of the rib arrangement, which is formed as a flange component (22) and which is connected with a connection section (14) of the inner skin section (11) of the skin shell (B); and a rib (21) which follows on from the flange component, which protrudes from the skin shell (B) and which extends in a longitudinal direction (L-R) of the rib arrangement.

4. Structural component (1) according to one of the preceding claims, **characterized in that** the connection component for connecting the same with the skin shell (B) is areally bonded to the inner skin section of the skin shell (B) due to an adhesive or is connected thereto by means of fasteners like in particular rivets.

5. Structural component (1) according to one of the preceding claims, **characterized in that** reinforcement components (10; 10a, 10b, 10c, 10d; 10e, 10f) are integrated in an intermediate region (Z1, Z2) along the reference longitudinal direction (L-R) and along at least one lateral edge of the skin shell section (14),
in particular, the intermediate region (Z1, Z2) for arrangement of the reinforcement components (10; 10a, 10b, 10c, 10d; 10e, 10f) extends areally from the edge of the connection section (14) to a distance of a maximum of ten times the thickness of the skin shell (B) from an edge of the core layer end.

6. Structural component (1) according to one of the preceding claims, **characterized in that** several reinforcement profile carriers are disposed beside each other when viewed across the longitudinal direction (L-R) of the rib arrangement, and **in that** several reinforcement components (10; 10a, 10b, 10c, 10d; 10e, 10f) are disposed along the reinforcement profiles and along the longitudinal direction (L-R) of the rib arrangement.

7. Structural component (1) according to one of the preceding claims, **characterized in that** at least one reinforcement profile carrier (V) is provided which is formed of two profile plates, one of which is connected to the inner skin section (11) and the respective other one is connected to the outer skin section (12), and a support rib that connects the aforesaid and that has a double-T profile cross section,
in particular, at the edge portions (R1, R2) which define the connection section (14) in each case two neighboring reinforcement profile carriers (V) are arranged, between which reinforcement components are inserted in the core layer (13), and
in particular, the reinforcement components (10; 10a, 10b, 10c, 10d; 10e, 10f) are inserted such that the ends of each reinforcement component (10; 10a, 10b, 10c, 10d; 10e, 10f) in each case at least partially penetrate a profile plate being disposed at the inner skin section (11) and a profile plate being disposed at the outer skin section (12) of neighboring reinforcement profile carriers (V).

8. Structural component (1) according to one of the preceding claims, **characterized in that** at least one reinforcement profile carrier is provided which is formed of two profile plates and two support ribs connecting these profile plates, wherein one of the two profile plates is connected to the inner skin section (11) and the other one of the two profile plates is connected to the outer skin section (12), wherein the profile cross section of the reinforcement profile carrier is a box-shaped profile cross section,
in particular, the reinforcement components are inserted such that the ends of a respective one of the reinforcement components at least partially penetrate a profile plate being disposed at the inner skin section (11) and a profile plate being disposed at the outer skin section (12), the profile plates being part of the same reinforcement profile carrier (V).

9. Structural component (1) according to one of the preceding claims, **characterized in that** along at least one reinforcement profile carrier (V) in the longitudinal direction (L-R) of the rib arrangement several reinforcement components (10; 10a, 10b, 10c, 10d; 10e, 10f) are integrated in the skin shell (B) which project through at least 85% of the shear-force-absorbing core layer (53) in the latter's thickness direction in order to improve the crack resistance of the skin shell (B) in the outer edge section.

10. Structural component (1) according to one of the preceding claims, **characterized in that** reinforcement components (10; 10a, 10b, 10c, 10d; 10e, 10f) in the skin shell (B) are in each case arranged as reinforcement devices (10), in groups of reinforcement components, which groups are situated in a volume component (V) of the skin shell (B), wherein the volume components (V) are arranged one behind the other along the rib longitudinal direction (L-R), wherein each group of a volume component (V) in each case is formed of a combination of at least two reinforcement components (10; 10a, 10b, 10c, 10d; 10e, 10f) whose alignments in each case deviate by a maximum of 30 degrees from the thickness direction (D-B) of the skin shell (B), and which are arranged in a regular or irregular manner around a centre axis of the volume component (V),
in particular, at least part of the reinforcement devices (10) is formed of pairs of reinforcement components (10; 10a, 10b, 10c, 10d; 10e, 10f), wherein pairs of reinforcement components comprise X-shaped orientations when viewed in the direction of the longitudinal extension of the outer edge section (60) of the skin shell (B).

11. Structural component (1) according to one of preceding claims 1 to 10, **characterized in that** the angle between the longitudinal direction of the respective reinforcement component and the thickness direction of the skin shell at this position is within a range of between 45 degrees and 10 degrees.

12. Structural component (1) according to one of claims 1 to 11, **characterized in that** reinforcement components (10; 10a, 10b, 10c, 10d; 10e, 10f) at least in part are of a pin-shaped design, in particular, one end of reinforcement components (10; 10a, 10b, 10c, 10d; 10e, 10f) in each case comprises a foot-like widened part.

13. Structural component (1) according to one of claims 1 to 12, **characterized in that** reinforcement components (10; 10a, 10b, 10c, 10d; 10e, 10f) are of a needle-shaped design.

14. Structural component (1) according to one of the preceding claims, **characterized in that** the shear-force-absorbing core layer (13) comprises at least one core layer reinforcement section (17), in particular of resin, which extends in at least one of the two intermediate regions (Z1, Z2) and along the rib arrangement longitudinal direction (L-R) and across the longitudinal direction of the shear-force-absorbing core layer (13) and through the same, wherein the reinforcement section is formed of a material that provides at least twice the stiffness of the shear-force-absorbing core layer (13),
in particular, the core layer reinforcement section (17) is formed of resin and
in particular, several reinforcement components project through the core layer reinforcement section (17).

15. Flow body with a structural component (1) with a main-load-bearing skin shell (B) according to one of the preceding claims, wherein the main-load-bearing skin shell (B) is the skin of the flow body.

## Revendications

1. Elément de structure (1) avec au moins un panneau de revêtement (B) qui supporte la charge principale et une structure porteuse (T) pour la fixation du panneau de revêtement,
cependant que le panneau de revêtement (B) est formé comme un panneau sandwich et par une section de peau intérieure (11), une section de peau extérieure (12) ainsi qu'une couche centrale (13), située entre celles-ci, qui absorbe les charges de poussée, qui relie la section de peau intérieure et la section de peau extérieure (11, 12) l'une à l'autre sur toute la surface,
que la structure porteuse (T) est formée par au moins une partie de raccordement en forme de plaque (22) qui est située entre celles-ci et transversalement par rapport à celles-ci et qui est reliée au panneau de revêtement (B) le long d'un sens longitudinal de référence (L-R), qui, pour l'appui du panneau de revêtement (B) qui est situé sur et à l'extérieur de la structure porteuse (T) et qui est adjacent sur toute la surface à la section de peau intérieure (11), est fixé à celle-ci,
qu'au moins un support profilé (V0 ; V1, V2, V3, V4) situé le long du sens longitudinal de référence (L-R) est placé dans le panneau de revêtement (B) pour former une section de renforcement dans la zone de raccordement (14) de la partie de raccordement en forme de plaque (22), support profilé qui est relié à la section de peau intérieure (11) et à la section de peau extérieure (12) pour la stabilisation du panneau de revêtement (B) lors d'une détérioration de celui-ci et qui les étaie ainsi mutuellement de l'extérieur,
**caractérisé en ce qu'**une multitude de parties de renforcement (10 ; 10a, 10b, 10c, 10d, 10e, 10f) est intégrée dans la zone de raccordement (14) de la partie de raccordement en forme de plaque (22) le long du sens longitudinal de référence (L-R).

2. Elément de structure (1) selon la revendication 1, **caractérisé en ce qu'**au moins quelques-unes des parties de renforcement (10 ; 10a, 10b, 10c, 10d, 10e, 10f) sont placées dans la couche centrale (13) de telle manière que leurs extrémités (F1) font saillie respectivement au moins partiellement de la section de peau intérieure (51) et/ou de la section de peau extérieure (52), cependant qu'en particulier la section de peau intérieure (11) et la section de peau extérieure (12) sont formées respectivement par plusieurs couches et qu'au moins une partie des parties de renforcement traversent une première couche.

3. Elément de structure (1) selon l'une des revendications précédentes, **caractérisé en ce que** la structure porteuse (T) est formée par au moins un arrangement de nervures (R), placé entre celles-ci et transversalement par rapport à celles-ci et relié au panneau de revêtement (B) le long de son sens longitudinal de référence (L-R) pour l'appui en surface du panneau de revêtement (B) sur la structure porteuse (T), arrangement qui présente : la partie de raccordement en forme de plaque (22), qui s'étend dans un sens longitudinal de l'arrangement de nervures (L-R) et qui est configurée comme une partie bride, qui est reliée à une zone de raccordement (14) de la section de peau intérieure (11) du panneau de revêtement et une nervure (21) qui s'y rattache, qui fait saillie à partir du panneau de revêtement (B) et qui s'étend dans un sens longitudinal de l'arrangement de nervures (L-R).

4. Elément de structure (1) selon l'une des revendications précédentes, **caractérisé en ce que** la partie de raccordement est collée à la section de peau intérieure du panneau de revêtement (B) sur toute sa surface pour la fixation de celle-ci au panneau de revêtement (B) ou est reliée par des éléments de raccord, en particulier par des rivets.

5. Elément de structure (1) selon l'une des revendications précédentes, **caractérisé en ce que** des parties de renforcement (10 ; 10a, 10b, 10c, 10d, 10e, 10f) sont intégrées dans une zone intermédiaire (Z1, Z2) le long du sens longitudinal de référence (L-R) et le long d'au moins un bord latéral de la section du panneau de revêtement (14), en particulier que la zone intermédiaire (Z1, Z2) s'étend sur toute la surface, pour l'arrangement des parties de renforcement (10 ; 10a, 10b, 10c, 10d, 10e, 10f) à partir du bord de la zone de raccordement (14) jusqu'à une distance de maximum dix fois l'épaisseur du panneau de revêtement (B), à partir d'un bord de l'extrémité de la couche centrale.

6. Elément de structure (1) selon l'une des revendications précédentes, **caractérisé en ce que** plusieurs supports profilés de renforcement sont placés l'un à côté de l'autre transversalement par rapport au sens longitudinal de l'arrangement de nervures (L-R) et que plusieurs parties de renforcement (10 ; 10a, 10b, 10c, 10d, 10e, 10f) sont placées le long des profilés de renforcement et le long du sens longitudinal de l'arrangement de nervures (L-R).

7. Elément de structure (1) selon l'une des revendications précédentes, **caractérisé en ce qu'**au moins un support profilé de renforcement (V) est prévu qui est formé par deux panneaux profilés dont l'un est relié à la section de peau intérieure (11) et dont l'autre respective est relié à la section de peau extérieure (12) et par une nervure d'appui qui les relie, support profilé de renforcement dont la section profilée est une section profilée en double T, en particulier que respectivement deux supports profilés de renforcement (V) situés l'un à côté de l'autre sont placés sur des sections de bord (R1, R2) qui définissent la zone de raccordement (14), entre lesquels des parties de renforcement sont mises en place dans la couche centrale (13) et en particulier que des parties de renforcement (10 ; 10a, 10b, 10c, 10d, 10e, 10f) sont mises en place de telle manière que les extrémités de respectivement une partie de renforcement (10 ; 10a, 10b, 10c, 10d, 10e, 10f) traversent respectivement un panneau profilé situé sur la section de peau intérieure (11) et un panneau profilé situé sur la section de peau extérieure (12) de supports profilés de renforcement (V) situés l'un à côté l'autre.

8. Elément de structure (1) selon l'une des revendications précédentes, **caractérisé en ce qu'**au moins un support profilé de renforcement (V) est prévu qui est formé par deux panneaux profilés dont l'un est relié à la section de peau intérieure (11) et dont l'autre est respectivement relié à la section de peau extérieure (12) et par deux nervures d'appui qui les relient de telle manière que la section transversale profilée du support profilé de renforcement est une section transversale profilée en caisson, en particulier que des parties de renforcement sont mises en place de telle manière que les extrémités de respectivement une partie de renforcement traversent au moins partiellement respectivement un panneau profilé situé la section de peau intérieure (11) et un panneau profilé situé sur la section de peau extérieure (12) du même support profilé de renforcement (V).

9. Elément de structure (1) selon l'une des revendications précédentes, caractérisé en ce plusieurs parties de renforcement (10 ; 10a, 10b, 10c, 10d, 10e, 10f) sont intégrées dans le panneau de revêtement (B) le long d'au moins un profilé de renforcement (V) du sens longitudinal de l'arrangement de nervures (L-R), parties qui font saillie de respectivement au moins 85% de la couche centrale (13) qui absorbe les charges de poussée dans le sens de son épaisseur pour améliorer la résistance aux fissures du panneau de revêtement (B) dans la zone du bord extérieur.

10. Elément de structure (1) selon l'une des revendications précédentes, **caractérisé en ce que** des parties de renforcement (10 ; 10a, 10b, 10c, 10d, 10e, 10f) sont placées dans le panneau de revêtement (B) dans des groupes de parties de renforcement, situés respectivement dans une partie de volume (V) du panneau de revêtement (B), en tant que dispositifs de renforcement (10), les parties de volume (V) étant placées l'une derrière l'autre le long du sens longitudinal de l'arrangement de nervures (L-R), cependant que chaque groupe d'une partie de volume (V) est formé respectivement par une combinaison d'au moins deux parties de renforcement (10 ; 10a, 10b, 10c, 10d, 10e, 10f) dont les orientations dévient de respectivement maximum 30 degrés du sens de l'épaisseur du panneau de revêtement (B) et qui sont placées de manière régulière ou irrégulière autour de l'axe central de la partie de volume (V), en particulier qu'au moins une partie des dispositifs de renforcement (10) est formée par des paires de parties de renforcement (10 ; 10a, 10b, 10c, 10d, 10e, 10f) dont des paires de parties de renforcement sont placées dans la direction de l'extension en longueur de la section de bord extérieur (60) du panneau de revêtement (B).

11. Elément de structure (1) selon l'une des revendications précédentes 1 à 10, **caractérisé en ce que** l'angle entre le sens longitudinal de la partie de renforcement respective et le sens de l'épaisseur du panneau de revêtement est situé à cet endroit à l'intérieur d'une plage entre 45 degrés et 10 degrés.

12. Elément de structure (1) selon l'une des revendications précédentes 1 à 11, **caractérisé en ce que** les parties de renforcement (10 ; 10a, 10b, 10c, 10d, 10e, 10f) sont configurées au moins partiellement en forme de broches, en particulier qu'une extrémité de parties de renforcement est pourvue respectivement d'un élargissement de type pied.

13. Elément de structure (1) selon l'une des revendications précédentes 1 à 12, **caractérisé en ce que** les parties de renforcement (10 ; 10a, 10b, 10c, 10d, 10e, 10f) sont configurées en forme d'aiguilles.

14. Elément de structure (1) selon l'une des revendications précédentes, **caractérisé en ce que** la couche centrale (13) qui absorbe les charges de poussée présente au moins une zone de renforcement de couche centrale (17), formée en particulier en résine, qui est située dans au moins l'une des deux zones intermédiaires (Z1, Z2) et dans le sens longitudinal de l'arrangement de nervures (L-R) et qui s'étend transversalement à l'extension en longueur de la couche centrale (13) qui absorbe les charges de poussée en la traversant, cependant que la zone de renforcement est formée en un matériau qui présente au moins le double de rigidité de la couche centrale (13) qui absorbe les charges de poussée, en particulier que la zone de renforcement de couche centrale (17) est formée en résine et en particulier que plusieurs des parties de renforcement font saillie respectivement à travers la zone de renforcement de couche centrale (17).

15. Corps d'écoulement avec un élément de structure (1) avec un panneau de revêtement (B) qui supporte la charge principale selon l'une des revendications précédentes, le panneau de revêtement (B) qui supporte la charge principale étant le revêtement du corps d'écoulement.
